# EUROPEAN PATENT SPECIFICATION

(11) **EP 3 542 917 B1**
(45) Date of publication and mention of the grant of the patent: **08.03.2023**
(21) Application number: 17872072.8
(22) Date of filing: 17.10.2017
(51) Int. Cl.: B21C 37/08, B21C 51/00, B23K 13/00, G01N 21/892, B23K 11/06, B23K 11/25, B23K 13/02, B23K 31/12, B23K 11/087, B23K 26/03

(54) **APPARATUS,METHOD, AND PROGRAM FOR MONITORING OPERATION OF HIGH-FREQUENCY RESISTANCE WELDING AND INDUCTION HEATING WELDING OF ELECTRIC RESISTANCE WELDED STEEL PIPE**
VORRICHTUNG ZUR ÜBERWACHUNG EINES BETRIEBS ZUM HOCHFREQUENZ- WIDERSTANDSSCHWEISSEN UND INDUKTIONS- HEIZSCHWEISSEN EINES WIDERSTANDSGESCHWEISSTEN STAHLROHRS
APPAREIL DE SURVEILLANCE D'UNE OPÉRATION DE SOUDAGE PAR RÉSISTANCE HAUTE FRÉQUENCE ET DE SOUDAGE À CHAUFFAGE PAR INDUCTION D'UN TUYAU EN ACIER SOUDÉ PAR RÉSISTANCE ÉLECTRIQUE

(30) Priority: 15.11.2016 JP 2016222690
(43) Date of publication of application: 25.09.2019
(73) Proprietor: NIPPON STEEL CORPORATION, Tokyo (JP)
(72) Inventor: HASEGAWA, Noboru, Tokyo 100-8071 (JP); HAMATANI, Hideki, Tokyo 100-8071 (JP); MIURA, Takao, Tokyo 100-8071 (JP); KARUBE, Yoshifumi, Tokyo 100-8071 (JP); YAMAMOTO, Kazuto, Tokyo 100-8071 (JP)
(74) Representative: Vossius & Partner Patentanwälte Rechtsanwälte mbB
(86) International application number: PCT/JP2017/037591
(87) International publication number: WO 2018/092492

(56) References cited:
- EP-A1- 2 322 312
- JP-A- H0 740 061
- JP-A- H09 267 186
- JP-A- 2000 271 637
- JP-A- 2009 233 678
- JP-A- 2011 000 642
- JP-A- 2015 217 420

## Description

### FIELD

The present invention relates to an apparatus, method, and program for monitoring an operation of high frequency resistance welding and induction heating welding of an electric resistance welded steel pipe (below, referred to as "electric resistance welding") where a metal plate is continuously formed into a tubular shape by a group of rolls while being conveyed and two end parts in its circumferential direction made to converge to a V-shape are heated to melt and made to abut against each other.

### BACKGROUND

Electric resistance welded steel pipes are being used in a broad range of fields such as line pipes for oil or natural gas, oil well pipes, nuclear power use, geothermal use, chemical plant use, mechanical structure use, and general piping use. In a manufacturing facility for an electric resistance welded steel pipe, a strip of steel plate is continuously formed into a tubular shape by a group of rolls while being conveyed and two end parts in the circumferential direction made to converge to a V-shape are heated to melt and made to abut against each other.

When a strip of steel plate is continuously formed into a tubular shape by a group of rolls while being conveyed in this way, sometimes a step difference is formed between one end part of the steel plate and the other end part, that is, an abnormality called "misalignment" occurs. This misalignment leads to insufficient strength and other defective aspects of quality of the electric resistance welded steel pipe, so monitoring of electric resistance welding to detect misalignment has been sought.

As this type of art, PTL 1 discloses a method of monitoring the state of welding when bending a strip of metal plate and continuous butt welding the facing end faces to produce welded metal pipe comprising simultaneously detecting from the inlet side direction of the V-shape the edge parts in the plate thickness direction at the welded part at both facing end faces and the temperature profile of the center part in the plate thickness direction and estimating the state of input heat to the butt welded part based on the detected temperature profile. Further, according to this method, it is considered possible to also detect a state where the left and right abutting faces are offset to the top and bottom, that is, misalignment.

PTL 2 discloses a method of monitoring electric resistance welding comprising monitoring a weld zone in electric resistance welding continuously forming steel plate into a tubular shape while heating, then pressing together and welding the two end parts of the steel plate made to abut against each other. The method of monitoring electric resistance welding comprises detecting starting positions of discharge of molten steel, judging if the starting positions of discharge of molten steel detected at the two end parts are symmetric with respect to the abutting line of the two end parts, and, when it is judged that the starting positions of discharge of molten steel detected at the two end parts are not symmetric, outputting information indicating this effect. Further, using this method, it is considered possible to detect asymmetry in the heated states of the two end parts of the steel plate made to abut against each other during welding.

PTL 3 discloses a method of monitoring an electric resistance welding operation continuously forming a strip of steel plate into a tubular shape by a group of rolls while conveying it, and heating and melting the two ends of the steel plate in the circumferential direction made to converge to a V-shape so as to make them abut against each other. The method of monitoring the electric resistance welding operation comprises setting a temperature measurement region including the weld zone where the melted portion at the inside of the plate thickness of the steel plate starts to be discharged to the surface due to upset of the squeeze rolls, calculating the level of luminance of the temperature measurement region, converting the level of luminance to the temperature of the temperature measurement region based on preset temperature conversion data, and judging if the temperature of the temperature measurement region is a predetermined lower limit value or more. Further, using this method, it is considered possible to prove melting to avoid welding conditions where there is a possibility of melting failure and suppress the occurrence of defects due to melting failure.

PTL 4 describes a method for seam weld line tracking.

### [CITATIONS LIST]

### [PATENT LITERATURE]

[PTL 1] Japanese Unexamined Patent Publication No. 62-203680
[PTL 2] Japanese Unexamined Patent Publication No. 2015-217420
[PTL 3] Japanese Patent No. 5549963
[PTL 4] Japanese Unexamined Patent Publication No. H09-267186

### SUMMARY

### [TECHNICAL PROBLEM]

In PTL 1, the regions which melt and emit light at the two end faces which are butt welded together change into liquid to thereby become low in roughness or be cleared of irregularities thus leading to becoming mirror surfaces. Further, sometimes the end faces are treated to remove oxides at the upstream side of the abutting parts. In this case, the majorities of the two end faces become mirror surfaces. If in this way the two end faces to be butt welded together become mirror surfaces, the light emission profiles of the two end faces become uniform and further in principle it is not possible to separate the original emitted light and the reflected emitted light. For this reason, if measuring the temperature profiles of the two end faces as optical images like in PTL 1, the mirror images resulting from multiple reflection are measured as superposed images and it is not possible to precisely detect the temperature profiles at the welded parts at both the facing end faces. In particular, sometimes it is not possible to detect misalignment with small step differences.

In the method described in PTL 2, just the difference in starting points of discharge of molten steel is detected, so there is the problem that if molten metal happens to be discharged to the upper side of the misalignment, it will directly lead to mistaken detection. Furthermore, sometimes the WS (work side)/DS (drive side) balance of the V-convergence angle formed by the two edges of the steel material collapses during shaping, that is, so-called "rolling" occurs, but in this case, the reference axis between the horizontal axis of the captured image and the shaping becomes off and again there was the problem that the possibility of mistaken detection became higher.

In the method described in PTL 3, the temperature of the weld zone where the melted portion of the inside of the steel plate in the plate thickness starts to be discharged to the surface due to upset of the squeeze rolls is measured, so it is possible to prove melting to avoid welding conditions which might lead to melting failure, but it is not possible to precisely detect misalignment.

The present invention was made in consideration of the above such point and has as its object to enable precise detection of misalignment in electric resistance welding.

### [SOLUTION TO PROBLEM]

The present invention is defined in the claims.

### [ADVANTAGEOUS EFFECTS OF INVENTION]

According to the present invention, misalignment is detected by obtaining a grasp of the unevenness of the light emitting regions at the two sides of an abutting position at the outside surface or inside surface of the metal plate formed into a tubular shape, so it is possible to precisely detect misalignment in electric resistance welding without being affected by the end faces becoming mirror surfaces.

### BRIEF DESCRIPTION OF DRAWINGS

FIG. 1 is a view showing the configuration of a manufacturing facility of an electric resistance welded steel pipe and an apparatus for monitoring an operation of electric resistance welding according to a first embodiment.
FIG. 2 is a flow chart showing a method for monitoring an operation by an apparatus for monitoring an operation of electric resistance welding according to the first embodiment.
FIG. 3 is a flow chart showing processing for detection of a V-convergence point of the flow chart of FIG. 2.
FIG. 4 is a view showing a state of occurrence of misalignment.
FIG. 5 is a schematic view showing an image captured by an imaging device.
FIG. 6 is a view for explaining a V-convergence point.
FIG. 7 is a schematic view showing images on which image processing has been performed and for which the V-convergence point has been detected.
FIG. 8 is a schematic view showing an example of a binary image in which a blob at a V-convergence portion is not extracted.
FIG. 9 is a schematic view showing images for which the area has been calculated in the first embodiment.
FIG. 10 are graphs finding the area ratio in actual operation and plotting it along with the elapse of time.
FIG. 11 is a flow chart showing a method for monitoring operation of an apparatus for monitoring operation of electric resistance welding according to a second embodiment.
FIG. 12 gives views for explaining the reason why the V-convergence point V₁ shifts to the upstream side in the case where misalignment occurs compared to when misalignment does not occur.
FIG. 13 gives schematic views showing images for which the area is calculated in the second embodiment.
FIG. 14 is a view showing the configuration of a manufacturing facility of an electric resistance welded steel pipe and an apparatus for monitoring operation of electric resistance welding according to a third embodiment.
FIG. 15 gives schematic views showing images for which the area is calculated in the third embodiment.
FIG. 16 is a graph finding the area ratio in actual operation and plotting it along with the elapse of time.
FIG. 17 is a flow chart showing a method for monitoring operation of an apparatus for monitoring operation of electric resistance welding according to a fourth embodiment.
FIG. 18 gives schematic views showing images for which the area is calculated in the fourth embodiment.
FIG. 19 is a cross-sectional schematic view showing the directions of the high frequency current, the outflow of the melted portions due to electromagnetic force, and the discharge of the melted portions due to upset.

### DESCRIPTION OF EMBODIMENTS

Below, referring to the attached drawings, preferred embodiments of the present invention will be explained.

### First Embodiment

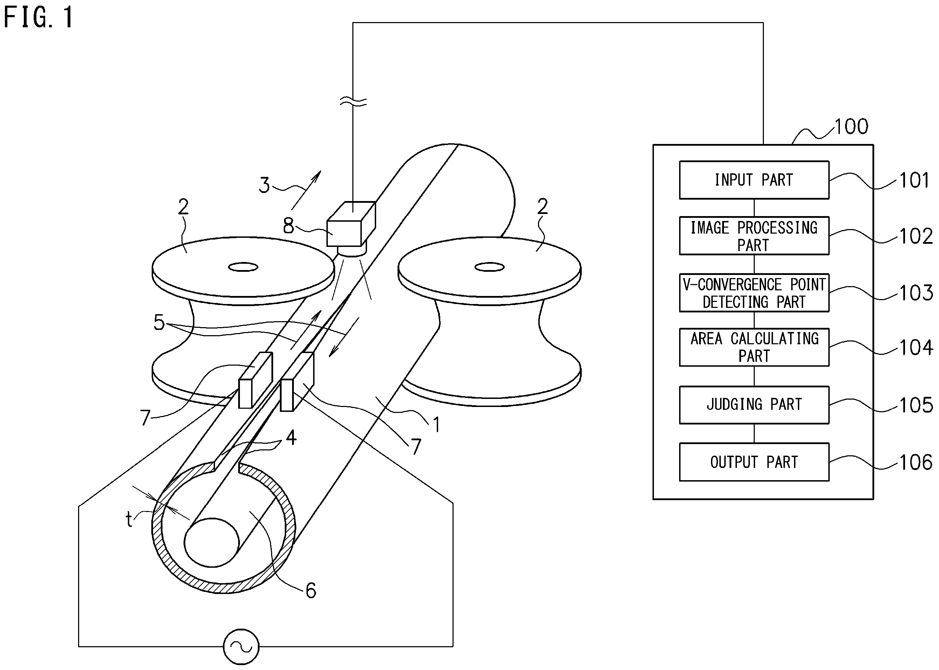

Referring to FIG. 1, a manufacturing facility of an electric resistance welded steel pipe will be explained in brief. As shown in FIG. 1, a strip of steel plate 1 is continuously formed into a tubular shape by a group of rolls (not shown) while being conveyed from an upstream side to a downstream side toward a direction 3. Further, an impeder 6 is arranged inside of the steel plate 1 being formed into the tubular shape and a pair of contact tips 7 (high frequency resistance welding) or induction coils (not shown) (induction heating welding) are used to supply high frequency current 5 while applying upset by the squeeze rolls 2. Due to this, two end parts 4, 4 of the steel plate 1 in the circumferential direction (below, also simply referred to as the "end parts") can be heated to melt to make them abut and melt bond the steel plate 1 while being made to converge to a V-shape (electric resistance welding (ERW)).

Above the steel plate 1, an imaging device 8 is arranged. This captures the pattern of natural light (radiant pattern) of the region including the V-convergence portion where the outside surface of the steel plate 1 being formed into a tubular shape converges to a V-shape. The V-convergence portion includes a geometric V-convergence point V₁ explained below, a portion where the two end parts 4, 4 of the steel plate 1 converge toward the geometric V-convergence point V₁, and an abutment point V₂ where the two end parts 4, 4 physically abut (contact). The "portion where the two end parts 4, 4 of the steel plate 1 converge toward a geometric V-convergence point V₁" preferably includes a region of 5 mm to 30 mm from the V-convergence point V₁ toward the upstream side. The imaging device 8, for example, uses a 1600× 1200 pixel 3CCD type color camera to capture images by an imaging field of a width of 30 mm or more and a length of 50 to 100 mm, an imaging resolution of 50 to 100 µm/pixel, an imaging rate of 30 fps or more, and an exposure time of 1/5000 sec or less. The image data captured by the imaging device 8 is input to an apparatus 100 for monitoring an operation of electric resistance welding.

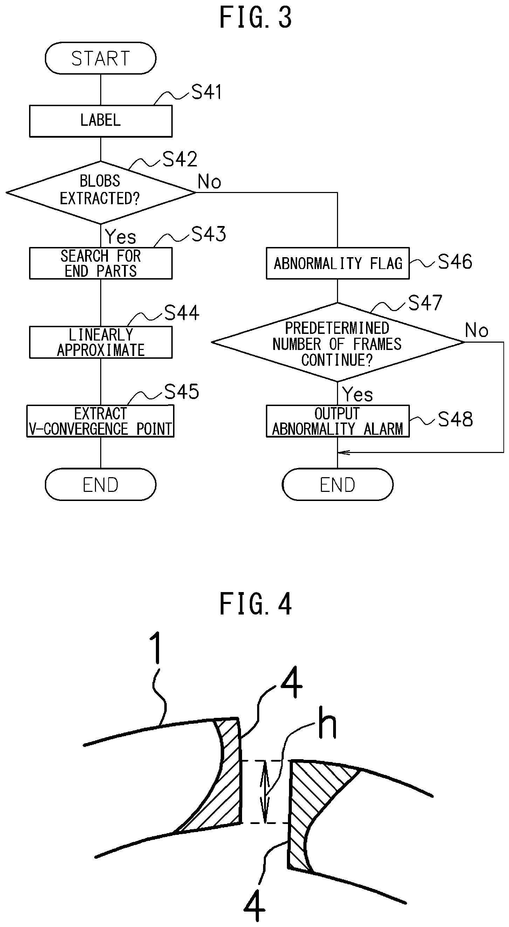

When a strip of steel plate 1 is continuously formed into a tubular shape by a group of rolls while being conveyed, sometimes a step difference occurs between one end part and the other end part of the steel plate, that is, "misalignment" occurs, as explained above. If misalignment occurs, as shown in FIG. 4, high frequency current 5 concentrates at the facing locations of the abutting end faces of the two end parts 4, 4 of the steel plate 1 (actual thicknesses "h" of abutting end faces). As a result, at the end part 4 offset upward (end part at left side in FIG. 4), the temperature rises at the inside surface side of the steel plate 1 and the degree of melting becomes higher. As opposed to this, at the end part 4 offset downward (end part at right side in FIG. 4), the temperature rises at the outside surface side of the steel plate 1 and the degree of melting becomes higher. Therefore, when misalignment occurs, unevenness occurs in the light emitting regions due to the melting or red heat at the two sides of the abutting position at the outside surface side and inside surface side of the steel plate 1. The misalignment is preferably within 10% of the plate thickness. For example, when the plate thickness is 10 mm, the misalignment is preferably made within 1.0 mm. Therefore, as explained in detail below, the imaging device 8 is used to capture the image of the region including the V-convergence portion and the metal parts flowing out to the surface of the metal plate due to the electromagnetic force at the downstream side from the V-convergence portion from the outside surface side of the steel plate 1 formed into a tubular shape. The inventors discovered that by obtaining a grasp of the unevenness of the light emitting regions of the metal parts at the two sides of the abutting position at the outside surface of the steel plate 1 based on that image, misalignment is detected. It is also possible to place the imaging device 8 at the inside surface side of the steel plate 1 formed into a tubular shape and, in the same way as the case of placing the imaging device 8 at the outside surface side of the steel plate 1, capture an image from the inside surface side of the steel plate 1 to detect misalignment. The "metal parts flowing out to the surface of the metal plate due to the electromagnetic force at the downstream side from the V-convergence portion" preferably include the metal parts at regions of 0 mm to 20 mm from the V-convergence portion toward the downstream side in the horizontal direction of the image obtained by the imaging device.

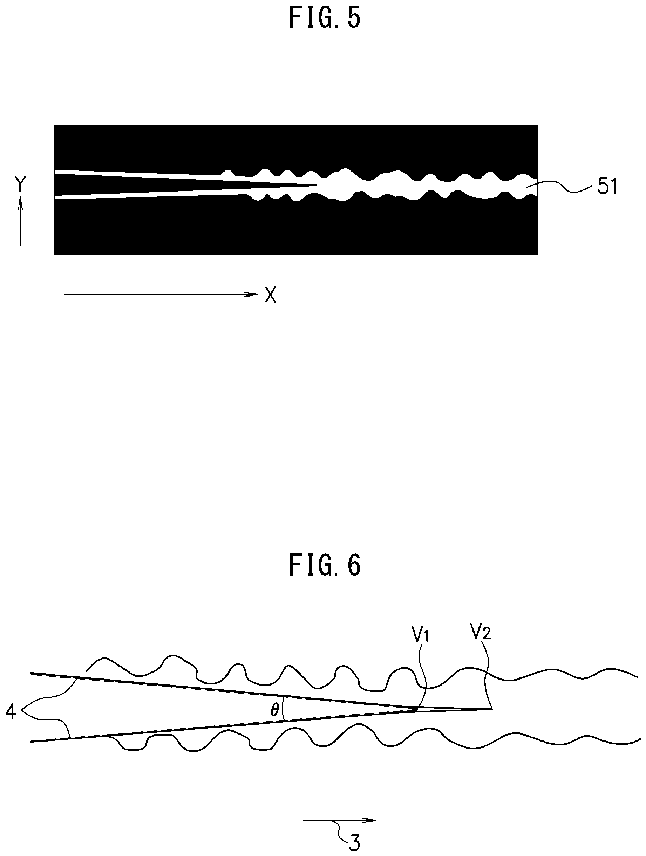

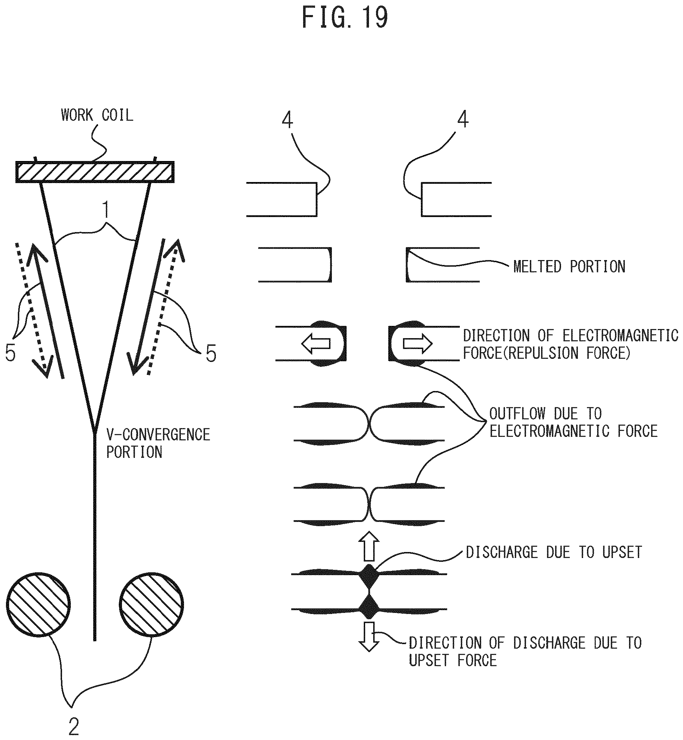

Returning the explanation to FIG. 1, in the apparatus 100 for monitoring an operation of electric resistance welding, 101 indicates an input part by which image data captured by the imaging device 8 is input. From the imaging device 8, an image having the conveyance direction of the steel plate 1 as the X-direction and the abutment direction of the steel plate 1 as the Y-direction is input. FIG. 5 is a schematic view illustrating the image captured by the imaging device 8. In the image captured by the imaging device 8, a light emitting region 51 (high heat region with high luminance level) appears along the two end parts 4, 4 of the steel plate 1. At the downstream side of the conveyance direction (X-direction), the melted portions of the two end parts 4, 4 flow out to the surface of the metal plate due to the electromagnetic force resulting in wave-like patterns. As shown in FIG. 1 and FIG. 19, the high frequency current 5 flows in opposite directions at facing locations of the abutting end faces of the two end parts 4, 4 of the steel plate 1, so repulsive force is generated between the two end parts 4, 4. The melted portions of the two end parts 4, 4 flow out to the surface of the metal plate due to the electromagnetic force. After that, the molten steel is pushed out in the upward and downward directions due to the upset of the strong pressure applied from the left and right. In the present invention, the unevenness of the light emitting regions of the metal parts flowing out to the surface of the metal plate due to this electromagnetic force is grasped to detect the misalignment. If misalignment occurs, current concentrates and melting is accelerated at the outside surface side of the steel plate 1 at the end part (end part at right side of FIG. 4) 4 offset downward, while current is reduced and melting becomes more difficult at the outside surface side of the end part 4 offset upward (end part at left side of FIG. 4), so the areas of outflow of molten metal to the outside surface of the metal plate at the two end parts 4, 4 differ. Similarly, if misalignment occurs, current concentrates and melting is accelerated at the inside surface side of the steel plate 1 at the end part 4 offset upward (end part at right side of FIG. 4), while current is reduced and melting becomes more difficult at the inside surface side of the end part 4 offset downward (end part at left side of FIG. 4), so the areas of outflow of molten metal to the inside surface of the metal plate at the two end parts 4, 4 differ. The change can be clearly discriminated even with small misalignment of less than 5% of the plate thickness, so it is possible to obtain a grasp of the unevenness of the light emitting regions of the metal parts flowing out to the surface of the metal plate due to the electromagnetic force so as to detect misalignment more precisely than in the past.

102 is an image processing part which processes the image input to the input part 101 by red component extraction, binarization, and other image processing.

103 is a V-convergence point detecting part which detects the geometric V-convergence point V₁ on the image processed by the image processing part 102. The geometric V-convergence point V₁, as shown in FIG. 6 by the broken line, is the point where the two end parts 4, 4 converging to a V-shape geometrically intersect. By capturing the pattern of natural light of the portion where the two end parts 4, 4 of the steel plate 1 converge toward the geometric V-convergence point V₁ (radiant patterns), it is possible to detect the geometric V-convergence point V₁ based on the approximation lines of the two edges of the two end parts 4, 4. Note that in actuality, as shown in FIG. 6, a two-stage convergence phenomenon is observed of there being an abutment point V₂ where the two end parts 4, 4 physically abut (contact each other) at the downstream side of the geometric V-convergence point V₁, instead of the two end parts 4, 4 abutting at the geometric V-convergence point V₁. Further, the welding point (point where solidification starts) is present at the further downstream side from the abutment point V₂. Note that in the following explanation, the geometric V-convergence point V₁ will sometimes be simply called the "V-convergence point V₁".

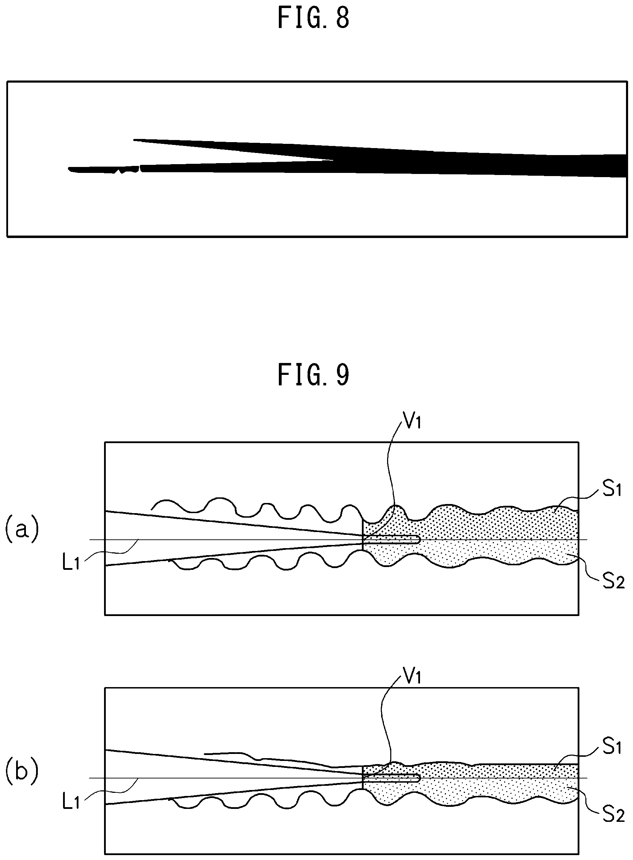

104 is an area calculating part which finds the line L₁ passing through the V-convergence point V₁ detected by the V-convergence point detecting part 103 and parallel to the X-direction of the image on the image processed at the image processing part 102. The imaging device 8 is set so that the horizontal direction of the image obtained by the imaging device 8 becomes parallel to the conveyance direction (X-direction) of the steel plate 1. The line passing through the V-convergence point V₁ and parallel to the horizontal direction of the image obtained at the imaging device 8 is defined as the "line L₁". Further, this line L₁ is deemed as the abutting position and an area S₁ of the light emitting region of the metal part flowing out to the surface of the metal plate due to the electromagnetic force at the downstream side from the V-convergence point V₁ at one side divided by the line L₁ and an area S₂ of the light emitting region of the metal part flowing out to the surface of the metal plate due to the electromagnetic force at the downstream side from the V-convergence point V₁ at the other side divided by the line L₁ are respectively calculated. The "metal parts flowing out to the surface of the metal plate due to the electromagnetic force at the downstream side from the V-convergence point V₁" preferably include the metal parts at regions of 0 mm to 20 mm from the V-convergence point V₁ toward the downstream side in the horizontal direction of the image obtained at the imaging device. Note that details of the calculation of the areas S₁, S₂ will be explained at the later explained FIG. 9.

105 is a judging part which compares the areas S₁, S₂ of the light emitting regions at the two sides of the abutting position calculated at the area calculating part 104 to judge the occurrence of any misalignment.

106 is an output part which, for example, displays the images handled by the parts 101 to 105 and the results of comparison of the areas S₁, S₂ at the judging part 105 on a not shown display device. Further, when the judging part 105 judges misalignment, for example, it outputs an alarm.

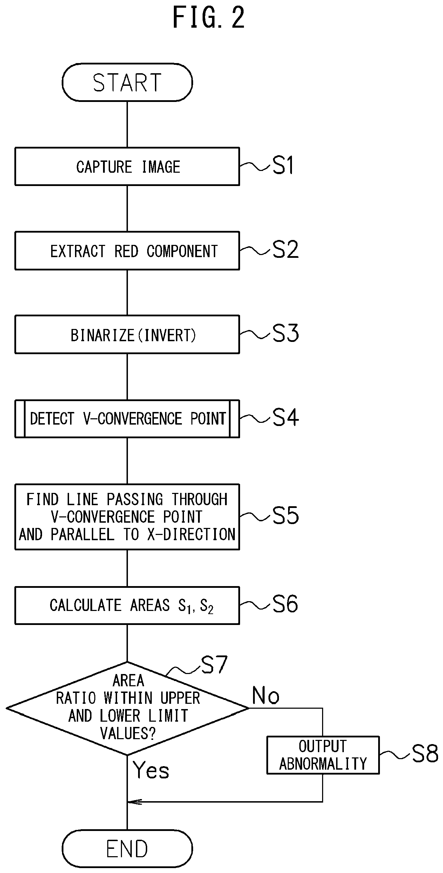

Next, referring to FIG. 2, the method for monitoring operation according to the apparatus 100 for monitoring an operation of electric resistance welding according to the first embodiment will be explained in detail. The image capture operation by the imaging device 8 is performed continuously at certain time intervals. One image captured at the same timing is called a "frame". If the image data is input from the imaging device 8 through the input part 101 (step S1), the image processing part 102 extracts the red component (wavelength 590 to 680 nm) from the image data to clarify the contrast (step S2).

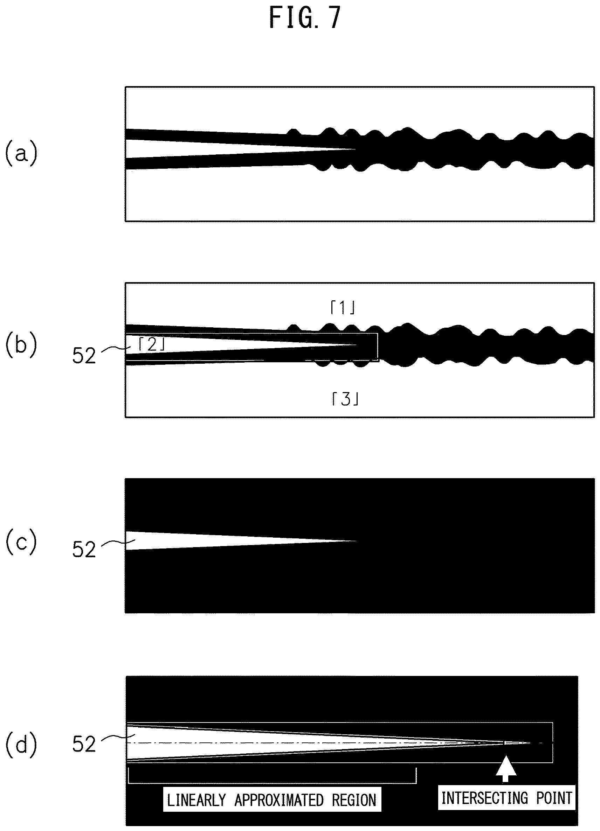

The image processing part 102 binarizes (inverts) the image data from which the red component has been extracted at step S2 (step S3). Here, "0" is entered for a pixel with a luminance level of a predetermined threshold value or more and "1" is entered for a pixel of less than a certain value. The threshold value here is made the level of a disturbance factor, such as the noise level of the camera or reflection from the top roll, or more and is adjusted in the range where the shapes of the melted parts or end parts of the steel material can be grasped. For example, if a melted region is the 160 level by 255 gradations and the disturbance factor is the 30 level, about the 40 level is selected. By setting this threshold value, the range of a light emitting region for which the area is calculated in the present application is determined. FIG. 7(a) is a schematic view illustrating a binary image.

The V-convergence point detecting part 103 detects the geometric V-convergence point V₁ on the binary image generated at step S3 (step S4). FIG. 3 shows a specific example of the processing for detection of the V-convergence point of step S4. First, as shown in FIG. 7(b), labeling is performed for labeling each blob (step S41), then it is judged if a blob matching predetermined conditions has been extracted (step S42). The "blob" referred to here means a region forming a clump at the 255 level in a binary image (at 8 bit, 0 or 255 level), more specifically means an individual region where any of the eight pixels adjoining a pixel of "1", including the four pixels to the top, bottom, left, and right and the four pixels in the diametrical directions, is "1" and are connected to form a clump. Further, "labeling" indicates assigning the same label numbers to individual blobs to extract specific blobs and perform processing for extracting positions inside the image (maximum points and minimum points of X-coordinates and maximum points and minimum points of Y-coordinates) and widths, lengths, areas, etc. together. For example, at FIG. 7(b), the three blobs are labeled "1", "2", and "3". If at step S42 there is a blob matching predetermined conditions, that blob (here, the label "2") is extracted as the blob 52 of the V-convergence portion of the portion where the two end parts 4, 4 converge in a V-shape (see FIG. 7(c)) and its coordinates, area, or other shape information is acquired. For example, in the binary image shown in FIG. 7(a), if there is a blob contiguous with the left end and having a predetermined area condition, that is extracted as the blob 52 of the V-convergence portion. As the condition of the predetermined area, for example, the condition of the actual dimension of the area of the blob being 15 to 150 mm² and/or the condition of the actual dimension of the circumscribing rectangular shape being 25 to 320 mm² may be set.

If at step S42 a blob matching predetermined conditions is extracted, the two end parts 4, 4 of the steel plate 1 are searched for at the extracted blob 52 of the V-convergence portion (step S43). As shown in FIG. 7(d) enlarging FIG. 7(c), points where "1" becomes "0" are searched for in the +Y-direction and -Y-direction from the line passing through the downstream most point of the blob 52 of the V-convergence portion in the conveyance direction and parallel to the X-direction (shown by one-dot chain line in figure) and the points are deemed end parts 4 of the steel plate 1. This is performed in a predetermined range in the direction converging to the V-shape (X-direction), for example, in a range of 2/3 from the left end of the range from the left end of the binary image (downstream side of conveyance direction) to the front end of the blob 52 of the V-convergence portion. Further, the end parts 4, 4 of the steel plate 1 are linearly approximated in this predetermined range (step S44) and the intersecting point of approximation lines of the same is detected as the geometric V-convergence point V₁ (step S45). Note that, the above predetermined range is not always made "a range of 2/3 from the left end". If the position of the V-convergence point V₁ moves to the upstream side of the conveyance direction due to the operating conditions, it is preferable to set this to a smaller value, for example, 1/2, or other suitable value.

When searching for the end parts 4 of the steel plate 1, for example, it is also possible to search for the points where "0" becomes "1" from the top and bottom positions of the image shown in FIG. 7(d) in the Y-direction toward the inside. However, it is learned that the blob 52 of the V-convergence portion appears near the center of the image in the Y-direction. If the search is started from the topmost position and bottommost position of the image, the processing becomes wasteful. Therefore, as explained above, the points where "1" becomes "0" are searched for from the inside of the blob 52 of the V-convergence portion in the +Y-direction and -Y-direction to thereby shorten the processing time. Further, even if searching for the points where "0" becomes "1" from the top and bottom positions of the image toward the inside, it is possible to learn the Y-direction position of the broad part (left end of image) of the blob 52 at the V-convergence portion by labeling, so if searching for the points where "0" becomes "1" from the Y-direction position or near it toward the inside, it is possible to shorten the processing time.

If at step S42 a blob matching predetermined conditions is not extracted, an abnormal flag is set (step S46). For example, if the amount of input heat is low, as shown in FIG. 8, a blob at the V-convergence portion is not extracted, so the routine proceeds to step S46. Further, it is judged if the abnormal flag has been continuously set for exactly a predetermined number of frames (step S47). If the abnormal flag has been continuously set for exactly a predetermined number of frames, an abnormality alarm is output (step S48).

Returning the explanation to FIG. 2, the area calculating part 104, as shown in FIG. 9(a), finds the line L₁ passing through the V-convergence point V₁ detected at step S4 and parallel to the X-direction of the image on the binary image generated at step S3 (step S5). Note that, in FIG. 9, considering ease of viewing, the black and white such as shown in FIG. 7 is omitted. Further, the area calculating part 104 uses the line L₁ as the abutting position and, by labeling, respectively calculates the area S₁ of the light emitting region of the metal part flowing out to the surface of the metal plate due to the electromagnetic force at the downstream side from the V-convergence point V₁ at one side divided by the line L₁ and the area S₂ of the light emitting region of the metal part flowing out to the surface of the metal plate due to the electromagnetic force at the downstream side from the V-convergence point V₁ at the other side divided by the line L₁ (step S6).

The judging part 105 judges if the ratio of the area S₁ or S₂ of the light emitting region of either side designated in advance with respect to the sum of the area S₁ of the light emitting region at one side and the area S₂ of light emitting region at the other side calculated at step S6 is within the upper and lower limit values (step S7). If as a result the area ratio S₁/(S₁+S₂) or S₂/(S₁+S₂) is within the upper and lower limit values, it is judged that misalignment is not occurring, while if it is over the upper limit value or lower limit value, it is judged that misalignment is occurring. As explained in FIG. 4, when misalignment occurs, unevenness occurs in the light emitting regions at the two sides of the abutting position at the outside surface side or inside surface side of the steel plate 1 and the state becomes one shown in FIG. 9(b). Therefore, it may be judged that misalignment has not occurred if the area ratio is near 1/2, that is, for example, is in a range of 40% to 60%, and that misalignment has occurred if it is under 40% or over 60%. Further, it is also possible to judge normality/misalignment based on a calibration curve correlating the step difference with an area ratio determined by changing the misalignment. If the area ratio is over the upper limit value or lower limit value, an alarm is output or other indication of abnormality is output (step S8).

At step S7, it is also possible to calculate the ratio of the area S₁ and the area S₂ or the absolute value of the difference of the area S₁ and the area S₂ and judge if this exceeds a predetermined threshold value. However, if swinging or twisting etc. of the steel plate 1 at the time of conveyance causes one area of the areas S₁, S₂ to fluctuate, that fluctuation affects the other area as is, so if just finding the ratio or difference of the area S₁ and area S₂, the judgment will tend to become excessively sensitive. As opposed to this, as shown in the present embodiment, by making the judgment based on the ratio of one area to the overall area (S₁/(S₁+S₂) or S₂/(S₁+S₂)), more stable judgment becomes possible.

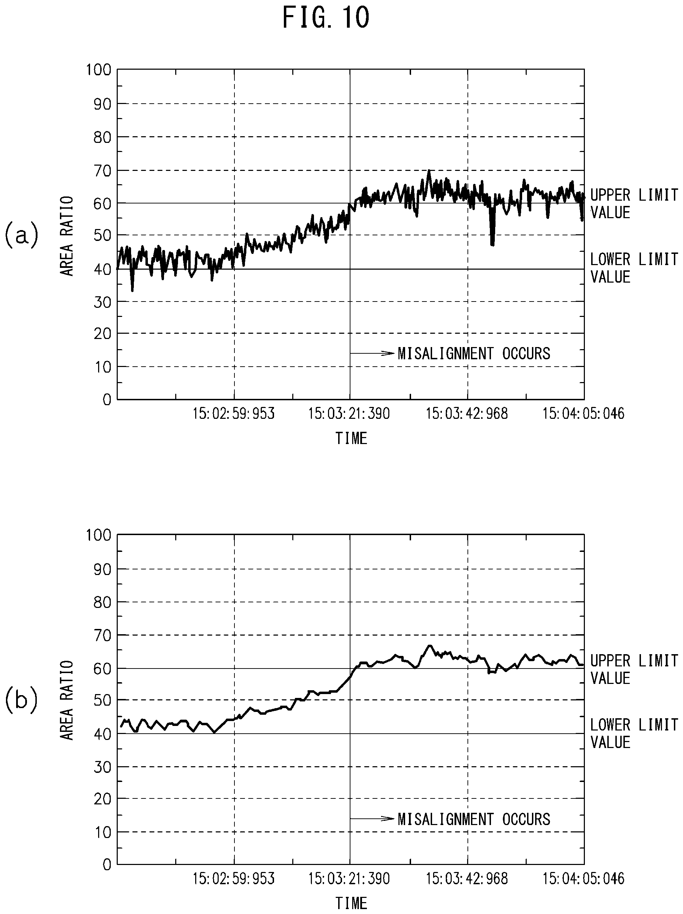

FIGS. 10(a) and (b) are graphs finding one area ratio with respect to the overall area in actual operation (S₁/(S₁+S₂) or S₂/(S₁+S₂)) and plotting it along with the elapse of time. As shown in FIG. 10(a), as a result of plotting while monitoring it constantly during operation, at the time 15:03:21 on, the state of the area ratio exceeding the upper limit value continues. After that, if tracing and inspecting an actual material, it was confirmed that misalignment actually occurred at that point of time. From this result as well, it is learned that the technique of detecting misalignment using the present invention is effective.

FIG. 10(b) is a view replotting the data of FIG. 10(a) by obtaining the moving average of seven points by a time series. In FIG. 10(a), even before 15:03:21, sometimes the area ratio temporarily exceeds the lower limit value, but there is a high possibility of this being a noise component. Therefore, by taking the moving average of several points or so of data to smooth the graph and remove the noise component, it is possible to more clearly judge the occurrence of misalignment.

As explained above, misalignment is detected by obtaining a grasp of the unevenness of the light emitting regions of metal parts flowing out to the surface of the metal plate due to electromagnetic force at the two sides of an abutting position at the outside surface or inside surface of a steel plate 1 formed into a tubular shape, so it is possible to precisely detect misalignment in electric resistance welding without being affected by the end faces becoming mirror surfaces. By applying the present invention, it becomes possible to detect misalignment even if a step difference of a small step difference of about 2 to 3 mm occurs.

### Second Embodiment

The second embodiment is an example configured to compare at the judging part 105 the areas S₁, S₂ of the light emitting regions of the metal parts flowing out to the metal plate due to the electromagnetic force at the two sides of the abutting position as explained in the first embodiment and also judge if the V-convergence point V₁ is at the upstream side from a predetermined X-direction position on the image processed by the image processing part 102 to judge if any misalignment has occurred. Note that, below, the points of difference from the first embodiment will be focused on in the explanation and overlapping explanations will be omitted.

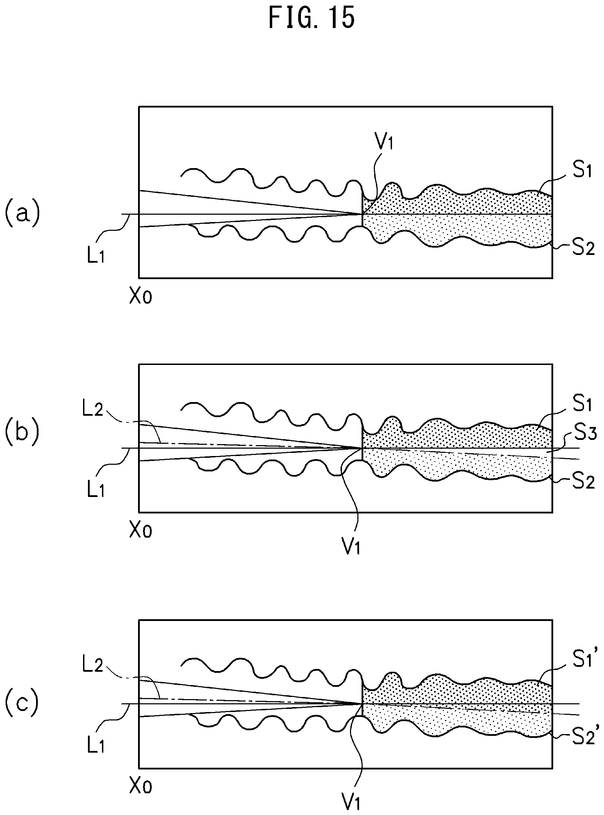

In the process of conveyance of the steel plate 1, the steel plate 1 sometimes swings or twists to the left and right of the conveyance direction. As explained in the first embodiment, the line L₁ passing through the V-convergence point V₁ and parallel to the X-direction of the image is found to calculate the areas S₁, S₂ of the light emitting regions at the two sides of this line L₁, but if the steel plate 1 swings or twists to the left and right of the conveyance direction, sometimes the actual abutting position becomes slanted with respect to the line L₁ (see FIG. 15(a)). In this case, regardless of the occurrence of any misalignment, a difference ends up occurring in the areas S₁, S₂ of the light emitting regions at the two sides of the line L₁.

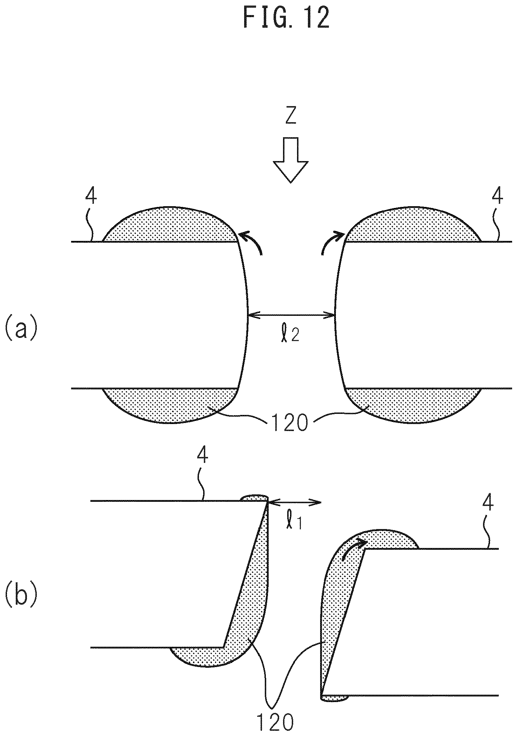

It was learned that if misalignment occurs, compared to if misalignment does not occur, the V-convergence point V₁ detected by the V-convergence point detecting part 103 shifts to the upstream side. If misalignment does not occur, drawn to show the extreme case, as shown in FIG. 12(a), the inside surface sides and outside surface sides of the two end parts 4, 4 melt substantially evenly. On the other hand, if misalignment occurs, drawn to show the extreme case, as shown in FIG. 12(b), the degree of melting becomes higher at the inside surface side of the steel plate 1 at the end part 4 offset upward (end part at left side of FIG. 12), while the degree of melting becomes higher at the outside surface side of the steel plate 1 at the end part 4 offset downward (end part at right side of FIG. 12). For this reason, as shown in FIGS. 12(a) and (b), even in the state where the distances between the two end parts 4, 4 are equal, if the melted portions 120 flow out to the surface of the metal plate due to the electromagnetic force, when observed from the arrow Z-direction, the distance 1₁ of viewing when misalignment occurs becomes shorter compared with the distance 1₂ of viewing when no misalignment occurs. In other words, when observed from the arrow Z-direction, if misalignment occurs, compared to if no misalignment occurs, the V-convergence point V₁ is detected at an early stage, that is, at the upstream side. Therefore, in the present embodiment, it is also judged if the V-convergence point V₁ is at the upstream side from a predetermined X-direction position.

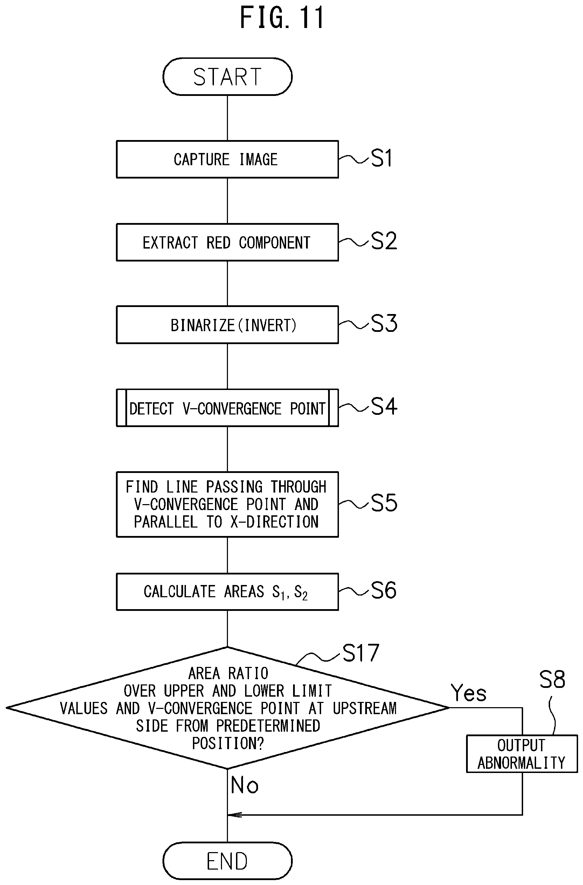

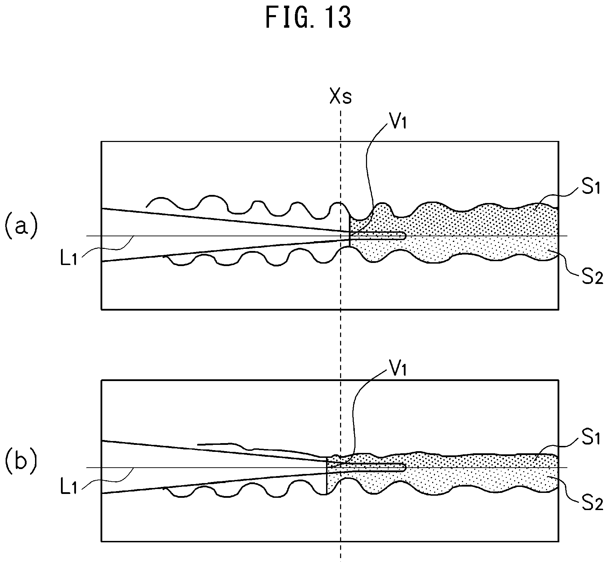

Next, referring to FIG. 11, a method for monitoring an operation according to an apparatus 100 for monitoring an operation of electric resistance welding according to the second embodiment will be explained in detail. Steps S1 to S6 and S8 are similar to FIG. 2 of the first embodiment. Here, the explanation will be omitted. At step S17, the judging part 105 judges if the ratio of the area S₁ or S₂ of the light emitting region of either side designated in advance with respect to the sum of the area S₁ of the light emitting region at one side and the area S₂ of light emitting region at the other side calculated at step S6 is within the upper and lower limit values. In addition, it judges if the V-convergence point V₁ detected at step S4 is at the upstream side from the predetermined X-direction position Xs. As a result, if the area ratio S₁/(S₁+S₂) or S₂/(S₁+S₂) is over the upper limit value or lower limit value and the V-convergence point V₁ is at the upstream side from a predetermined X-direction position Xs, it is judged that misalignment is occurring (see FIG. 13(b)), while otherwise, it is judged that misalignment is not occurring (see FIG. 13(a)). For example, even if the area ratio S₁/(S₁+S₂) or S₂/(S₁+S₂) exceeds the upper limit value or lower limit value, unless the V-convergence point V₁ is at the upstream side of the predetermined X-direction position Xs, it is deemed that there is a high possibility that this is caused by swinging or twisting etc. of the steel plate 1 and it is judged that no misalignment has occurred. By setting the position of the geometric V-convergence point V₁ as the condition for judgment of normality/abnormality, it is possible to obtain broader upper and lower limit values of the area ratio than the first embodiment, so, as explained above, even if the steel plate 1 swings or twists to the left and right in the conveyance direction, a high precision, stable judgment becomes possible.

As explained above, it is possible to eliminate the effect of swinging or twisting of the steel plate 1 etc. to detect misalignment, so it is possible to precisely detect misalignment in electric resistance welding.

### Third Embodiment

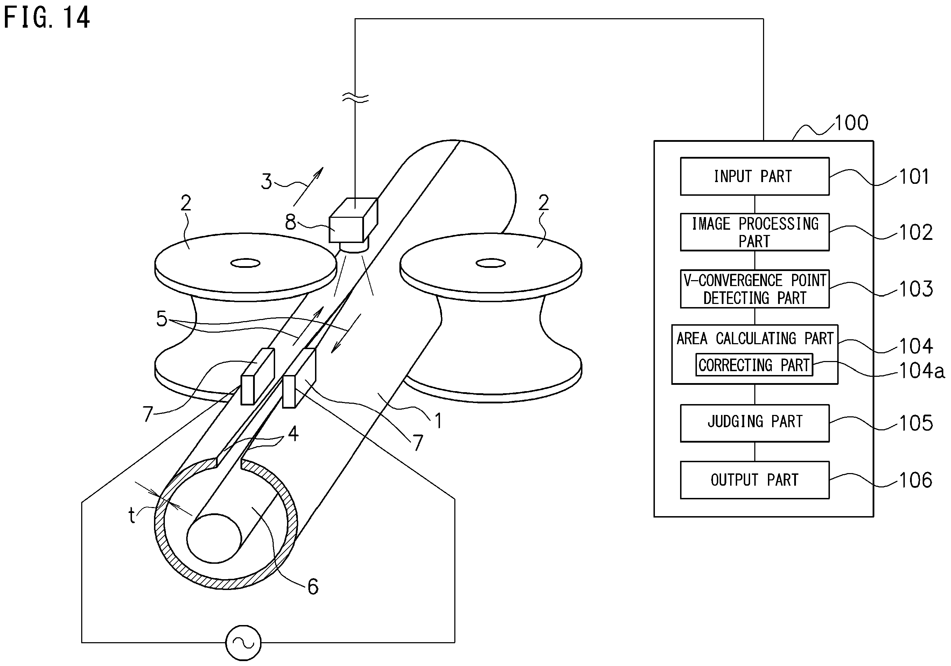

The third embodiment, as shown in FIG. 14, is an example where the area calculating part 104 is provided with a correcting part 104a and has the function of correcting the calculated areas S₁, S₂. Note that, below, the points of difference from the first embodiment will be focused on in the explanation and overlapping explanations will be omitted.

As stated in the second embodiment as well, in the process of conveyance of steel plate 1, if the steel plate 1 swings and twists to the left and right of the conveyance direction, the actual abutting position will become slanted with respect to the line L₁. For this reason, as shown in FIG. 15(a), without regard as to occurrence of any misalignment, sometimes a difference will arise in the areas S₁, S₂ of the light emitting region at the two sides of the line L₁.

Therefore, the area calculating part 104, as shown in FIG. 15(a), first, in the same way as the first embodiment, finds the line L₁ passing through the V-convergence point V₁ and parallel to the X-direction of the image and calculates the area S₁ of the light emitting region of the metal part flowing out to the surface of the metal plate due to the electromagnetic force at the downstream side from the V-convergence point V₁ at one side divided by the line L₁ and the area S₂ of the light emitting region of the metal part flowing out to the surface of the metal plate due to the electromagnetic force at the downstream side from the V-convergence point V₁ at the other side divided by the line L₁.

Next, the correcting part 104a, as shown in FIG. 15(b), finds the bisector L₂ of the angle formed by the intersection of approximation lines of the two end parts 4, 4 of the steel plate 1 found at step S44 of FIG. 3. Further, the region surrounded by the line L₁ and the bisector L₂ in the light emitting region of the metal part flowing out to the surface of the metal plate due to the electromagnetic force at the downstream side from the V-convergence point V₁ is used as the correction region and an area S₃ of the correction region is calculated.

Next, the correcting part 104a, as shown in FIGS. 15(b) and (c), adds the area S₃ to the area of the region which the bisector L₂ does not pass through in the light emitting region at the downstream side from the V-convergence point V₁ (in the case of the illustrated example, the area S₁) and subtracts the area S₃ from the area of the region which the bisector L₂ passes through to calculate the corrected area S₁'(=S₁+S₃), S₂'(=S₂-S₃). In other words, the area S₁ of the light emitting region at the downstream side from the V-convergence point V₁ at one side divided by the bisector L₂ and an area S₂' of the light emitting region at the downstream side from the V-convergence point V₁ at the other side divided by the bisector L₂ are respectively calculated.

After that, in the same way as the first embodiment, it is judged if the ratio of the corrected area S₁' or S₂' of the light emitting region of either side designated in advance with respect to the sum of the corrected area S₁' of the light emitting region at one side and the corrected area S₂' of the light emitting region at the other side is within the upper and lower limit values. If as a result the area ratio S₁'/(S₁'+S₂') or S₂'/(S₁'+S₂') is within the upper and lower limit values, it is judged that no misalignment has occurred, while if it is over the upper limit value or lower limit value, it is judged that misalignment has occurred.

As explained above, it is possible to detect misalignment while eliminating the effect of swinging or twisting etc. of the steel plate 1, so it is possible to precisely detect misalignment in the electric resistance welding.

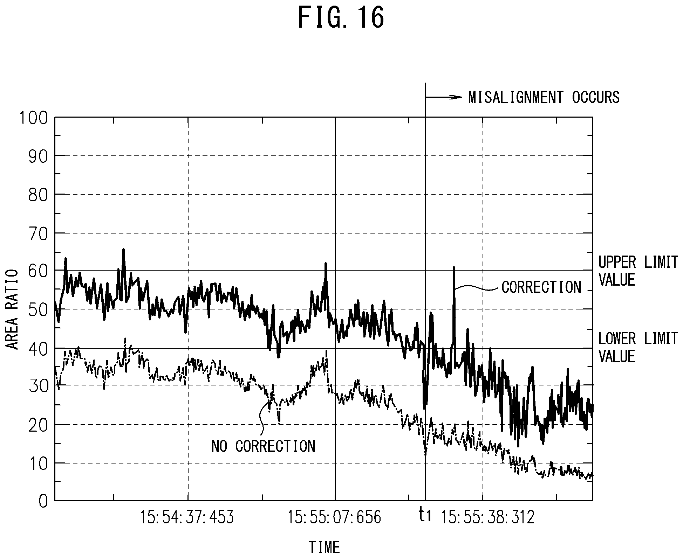

FIG. 16 is a graph finding the "uncorrected" area ratio (S₁/(S₁+S₂) or S₂/(S₁+S₂)) and the "corrected" area ratio (S₁'/(S₁'+S₂') or S₂'/(S₁'+S₂')) when twisting actually occurs in steel plate 1 in actual operation and plotting it along with the elapse of time. In the figure, the fine line shows the "uncorrected" characteristic, while the bold line shows the "corrected" characteristic. It is confirmed that up to the time t₁, no misalignment occurs, but with "no correction", the result becomes lower than the lower limit value, while with "correction", the result is kept within the upper and lower limit values after removing the noise component. It was confirmed that misalignment can be precisely detected even in the state where twisting occurs in the steel plate 1.

In the present embodiment, the bisector L₂ of the angle formed by the intersection of the approximation lines of the two end parts 4, 4 of the steel plate 1 is found, but the invention is not limited to this. For example, it is also possible to find the median line passing through the V-convergence point V₁ at the triangular shape formed by the approximation lines of the two end parts 4, 4 of the steel plate 1 and the X-direction end part of the image X₀.

### Fourth Embodiment

In the first embodiment to the third embodiment, to detect the unevenness of the area at the downstream side from the geometric V-convergence point V₁, a horizontal line passing through the geometric V-convergence point V₁ and further a bisector of the angle formed by the intersection of the approximation lines were used. As opposed to this, in the present embodiment, the example is shown of using just the approximation lines for finding the geometric V-convergence point V₁ to try to detect unevenness of the area. Note that, below, the points of difference from the first embodiment will primarily be explained and overlapping explanations will be omitted.

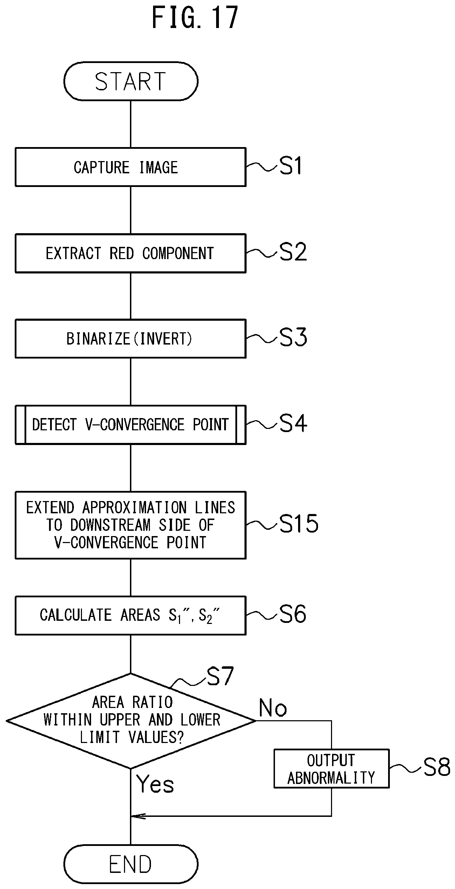

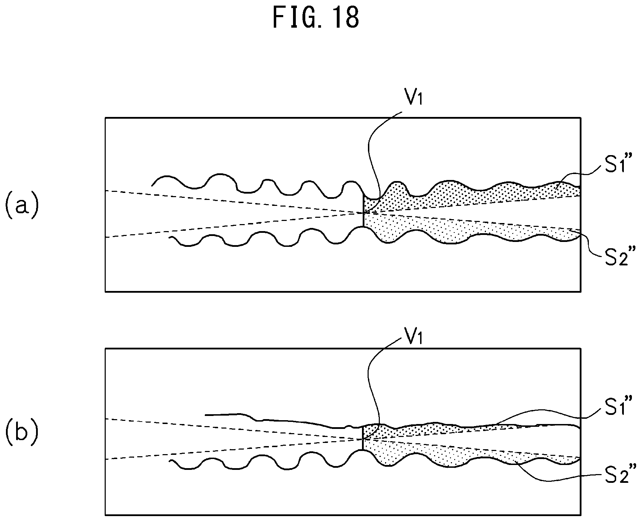

Referring to FIG. 17, a method for monitoring an operation according to the apparatus 100 for monitoring an operation of electric resistance welding according to the fourth embodiment will be explained in detail. Instead of step S5, the processing of step S15 is performed. Steps S1 to S4 and S6 to S8 are similar to FIG. 2 of the first embodiment, so here the explanation will be omitted. At step S15, the approximation lines of the end parts 4, 4 of the steel plate 1 obtained at step S4 (step S44) are extended to the downstream side of the V-convergence point V₁. Further, at step S6, the area calculating part 104, as shown in FIG. 18(a), calculates the area S₁" at the outside of the extended approximation line in the circumferential direction in the light emitting region of the metal part flowing out to the surface of the metal plate due to the electromagnetic force at one side at the downstream side from the V-convergence point V₁ and the area S₂" at the outside of the extended approximation line in the circumferential direction in the light emitting region of the metal part flowing out to the surface of the metal plate due to the electromagnetic force at the other side at the downstream side from the V-convergence point V₁. The "metal parts flowing out to the surface of the metal plate due to the electromagnetic force at the downstream side from the V-convergence point V₁" preferably include the metal parts at regions of 0 mm to 20 mm from the V-convergence point V₁ toward the downstream side in the horizontal direction of the image obtained at the imaging device.

At step S7, the judging part 105, in the same way as the first embodiment, judges if the area ratio (S₁"/(S₁"+S₂") or S₂"/(S₁"+S₂")) or the absolute value of the difference of areas (|S₁"-S₂"|) is within the upper and lower limit values. When misalignment occurs, unevenness occurs in the light emitting regions between the two sides of the abutting position at the outside surface side or inside surface side of the steel plate 1 and the state becomes one such as shown in FIG. 18(b). By doing this, even if the steel plate 1 swings or twists to the left and right of the conveyance direction, misalignment can be precisely and stably detected. Further, it is also enough to just extend the approximation lines of the two end parts in the circumferential direction converging to a V-shape, so it is not necessary to calculate the horizontal line passing through the geometric V-convergence point V₁ and, further, the bisector of the angle formed by intersection of the approximation lines, and the processing becomes simpler.

Even if finding the areas S₁", S₂" like in this embodiment, as explained in the second embodiment, it is also possible to together judge if the geometric V-convergence point V₁ is at the upstream side of a predetermined X-direction position.

Above, the present invention was explained together with various embodiments, but the present invention is not limited to these embodiments. Changes etc. are possible within the scope of the present invention. For example, in the above embodiments, a 3CCD type camera was used, but even if attaching an optical filter passing 570 to 740 nm or so to a monochrome camera, an image equivalent to the R-component of a color camera is obtained. For example, if using a camera provided with a 1/3 type CCD (XGA size) and the distance up to the V-convergence portion is 1.2 m, a lens with a focal distance f=75 mm and a brightness F8 is set above the V-convergence portion to capture an image. Preferably γ-correction is performed to enable regions with low luminance at the end parts 4 of the steel plate 1 to be accurately detected.

The apparatus for monitoring an operation of electric resistance welding of the present invention specifically can be achieved by a computer system provided with a CPU, ROM, RAM, etc. and is realized by a CPU running a program. The apparatus for monitoring an operation of electric resistance welding of the present invention may be comprised of a single apparatus or may be comprised of a plurality of pieces of equipment.

Further, the object of the present invention is also achieved by providing a storage medium storing program codes of software for realizing the above-mentioned function of monitoring an operation of electric resistance welding in a system or an apparatus. In this case, the program codes read out from the storage medium themselves realize the functions of the above-mentioned embodiment, and the program codes themselves and the storage medium storing the program codes constitute the present invention. As the storage medium for providing the program codes, for example, a flexible disk, hard disk, optical disk, magneto optical disk, CD-ROM, CD-R, magnetic tape, nonvolatile memory card, ROM, etc. can be used.

### REFERENCE SIGNS LIST

1: steel plate
2: squeeze roll
3: conveyance direction
4: circumferential direction end part
5: high frequency current
6: impeder
7: contact tip
8: imaging device
100: apparatus for monitoring operation of electric resistance welding
101: input part
102: image processing part
103: V-convergence point detecting part
104: area calculating part
104a: correcting part
105: judging part
106: output part
h: actual thickness of abutting end faces
L₁: line parallel to X-direction of image
L₂: bisector of angle formed by intersection of approximation lines of two end parts of steel plate
l₁: distance of viewing when misalignment occurs
l₂: distance of viewing when no misalignment occurs
t: thickness of steel plate
S₁: area of light emitting region at one side
S2: area of light emitting region at other side
S3: correction region surrounded by line L₁ and bisector L₂
S₁': S₁+S₃
S₂': S₂-S₃
V₁: V-convergence point
V₂: abutment point
X₀: X-direction end part of image
Xs: predetermined X-direction position

## Claims

1. An apparatus for monitoring an operation of high frequency resistance welding and induction heating welding of an electric resistance welded steel pipe where a strip of metal plate (1) is continuously formed into a tubular shape by a group of rolls (2) while being conveyed from an upstream side to a downstream side and two end parts (4, 4) of said metal plate (1) in its circumferential direction made to converge to a V-shape are heated to melt and made to abut against each other, **characterized in that**
said apparatus is configured to detect misalignment being a step difference between said two end parts (4, 4) of said metal plate (1) by obtaining a grasp of unevenness of light emitting regions of metal parts at two sides in the circumferential direction at an abutting position at an outside surface or inside surface of said metal plate (1) based on an image, captured by an imaging device (8) from the outside surface side or inside surface side of said metal plate (1) being formed into the tubular shape, of a region including a V-convergence portion where said two end parts in the circumferential direction converge to a V-shape and said metal parts flowing out to the surface of said metal plate (1) by electromagnetic force at a downstream side from said V-convergence portion, wherein the unevenness occurs in the light emitting regions due to the melting or red heat at the two sides of the abutting position at the outside surface side and inside surface side of the metal plate (1).

2. The apparatus for monitoring an operation of high frequency resistance welding and induction heating welding of an electric resistance welded steel pipe according to claim 1, **characterized in that** the apparatus comprises
an input means (101) to which an image having a conveyance direction of said metal plate (1) as an X-direction and a circumferential direction of said metal plate (1) as a Y-direction is input from said imaging device,
an image processing means (102) for performing image processing on the image input to said input means,
a V-convergence point detecting means (103) for detecting a geometric V-convergence point where said two end parts in the circumferential direction converging to the V-shape geometrically intersect by linearly approximating said two end parts in the circumferential direction and finding the intersecting point of the approximation lines of said two end parts in the circumferential direction in the image processed by said image processing means,
an area calculating means (104) for finding a line passing through the geometric V-convergence point detected by said V-convergence point detecting means and parallel to the X-direction of the image in the image processed by said image processing means, using said line as the abutting position, and calculating an area S₁ of the light emitting region of said metal part at the downstream side from said geometric V-convergence point at one side divided by said line and an area S₂ of the light emitting region of said metal part at the downstream side from said geometric V-convergence point at the other side divided by said line, and
a judging means (105) for comparing the areas S₁, S₂ of the light emitting regions at the two sides of the abutting position calculated by said area calculating means to judge the occurrence of misalignment.

3. The apparatus for monitoring an operation of high frequency resistance welding and induction heating welding of an electric resistance welded steel pipe according to claim 1, **characterized in that** the apparatus comprises
an input means (101) to which an image having a conveyance direction of said metal plate (1) as an X-direction and a circumferential direction of said metal plate (1) as a Y-direction is input from said imaging device,
an image processing means (102) for performing image processing on the image input to said input means,
a V-convergence point detecting means (103) for detecting a geometric V-convergence point where said two end parts in the circumferential direction converging to a V-shape geometrically intersect by linearly approximating said two end parts in the circumferential direction and finding the intersecting point of the approximation lines of said two end parts in the circumferential direction in the image processed by said image processing means,
an area calculating means (104) for extending the approximation lines linearly approximating the two end parts in the circumferential direction to the downstream side over said geometric V-convergence point and calculating an area S₁" of the light emitting region of said metal part at the outside from one of said extended approximation lines and an area S₂" of the light emitting region of said metal part at the outside from the other of the extended approximation lines, and
a judging means (105) for comparing the areas S₁", S₂" of the light emitting regions calculated by said area calculating means to judge the occurrence of misalignment.

4. The apparatus for monitoring an operation of high frequency resistance welding and induction heating welding of an electric resistance welded steel pipe according to claim 2, **characterized in that** said judging means finds a ratio of either of said area S₁ of the light emitting region at the one side and said area S₂ of the light emitting region at the other side with respect to the sum of said area S₁ of the light emitting region at the one side and said area S₂ of the light emitting region at the other side and judges whether said ratio is within predetermined upper and lower limit values.

5. The apparatus for monitoring an operation of high frequency resistance welding and induction heating welding of an electric resistance welded steel pipe according to claim 3, **characterized in that** said judging means finds a ratio of either of said area S₁" of the light emitting region at the one side and said area S₂" of the light emitting region at the other side with respect to the sum of said area S₁" of the light emitting region at the one side and said area S₂" of the light emitting region at the other side and judges whether said ratio is within predetermined upper and lower limit values.

6. The apparatus for monitoring an operation of high frequency resistance welding and induction heating welding of an electric resistance welded steel pipe according to any one of claims 2 to 5, **characterized in that** said judging means judges whether said geometric V-convergence point is at an upstream side from a predetermined X-direction position in the image processed by said image processing means, wherein said predetermined X-direction position is a position of said geometric V-convergence point when said misalignment does not occur.

7. The apparatus for monitoring an operation of high frequency resistance welding and induction heating welding of an electric resistance welded steel pipe according to claim 2, **characterized in that** said area calculating means finds a bisector of an angle of intersection of the approximation lines of said two end parts in the circumferential direction converging to the V-shape or a median line passing through said geometric V-convergence point in a triangular shape formed by the approximation lines of said end parts in the circumferential direction converging to the V-shape and the end part at the upstream side in the X-direction of said image in the image processed at said image processing means and corrects said area S₁ of the light emitting region at the one side and said area S₂ of the light emitting region at the other side calculated by said area calculating means.

8. A method for monitoring an operation of high frequency resistance welding and induction heating welding of an electric resistance welded steel pipe continuously forming a strip of metal plate (1) into a tubular shape by a group of rolls (2) while conveying the strip of metal plate (1) from an upstream side to a downstream side and heating two end parts (4, 4) of said metal plate (1) in its circumferential direction made to converge to a V-shape to melt and making the two end parts (4, 4) of said metal plate (1) abut against each other, **characterized in that**:
said method comprises capturing an image, by an imaging device (8) from an outside surface side or inside surface side of said metal plate (1) being formed into the tubular shape, of a region including a V-convergence portion where said two end parts in the circumferential direction converge to a V-shape and metal parts flowing out to the surface of said metal plate (1) by electromagnetic force at a downstream side from said V-convergence portion, and detecting misalignment being a step difference between said two end parts (4, 4) of said metal plate (1) by obtaining a grasp of unevenness of light emitting regions of said metal part at two sides in the circumferential direction at an abutting position at the outside surface or inside surface of said metal plate (1) based on said image, wherein the unevenness occurs in the light emitting regions due to the melting or red heat at the two sides of the abutting position at the outside surface side and inside surface side of the metal plate (1).

9. The method for monitoring an operation of high frequency resistance welding and induction heating welding of an electric resistance welded steel pipe according to claim 8, **characterized by**:
capturing an image having a conveyance direction of said metal plate (1) as an X-direction and a circumferential direction of said metal plate (1) as a Y-direction by said imaging device,
performing image processing on said captured image,
detecting a geometric V-convergence point where said two end parts in the circumferential direction converging to the V-shape geometrically intersect by linearly approximating said two end parts in the circumferential direction and finding the intersecting point of the approximation lines of said two end parts in the circumferential direction in the processed image,
finding a line passing through the detected geometric V-convergence point and parallel to the X-direction of the image in the processed image, using said line as the abutting position, and calculating an area S₁ of the light emitting region of said metal part at the downstream side from said geometric V-convergence point at one side divided by said line and an area S₂ of the light emitting region of said metal part at the downstream side from said geometric V-convergence point at the other side divided by said line, and
comparing the areas S₁, S₂ of the light emitting regions at the two sides of the abutting position to judge the occurrence of misalignment.

10. The method for monitoring an operation of high frequency resistance welding and induction heating welding of an electric resistance welded steel pipe according to claim 8, **characterized by**:
capturing an image having a conveyance direction of said metal plate (1) as an X-direction and a circumferential direction of said metal plate (1) as a Y-direction by said imaging device,
performing image processing on said captured image,
detecting a geometric V-convergence point where said two end parts in the circumferential direction converging to the V-shape geometrically intersect by linearly approximating said two end parts in the circumferential direction and finding the intersecting point of the approximation lines of said two end parts in the circumferential direction in the processed image,
extending the approximation lines linearly approximating said two end parts in the circumferential direction to the downstream side of said conveyance direction over said geometric V-convergence point and calculating an area S₁" of the light emitting region of said metal part at the outside from one of said extended approximation lines and an area S₂" of the light emitting region of said metal part at the outside from the other of the extended approximation lines, and
comparing said areas S₁", S₂" of the light emitting regions calculated to judge the occurrence of misalignment.

11. The method for monitoring an operation of high frequency resistance welding and induction heating welding of an electric resistance welded steel pipe according to claim 9, **characterized by**, in said judgment, finding a ratio of either of said area S₁ of the light emitting region at the one side and said area S₂ of the light emitting region at the other side with respect to the sum of said area S₁ of the light emitting region at the one side and said area S₂ of the light emitting region at the other side, and judging whether said ratio is within predetermined upper and lower limit values.

12. The method for monitoring an operation of high frequency resistance welding and induction heating welding of an electric resistance welded steel pipe according to claim 10, **characterized by**, in said judgment, finding a ratio of either of said area S₁" of the light emitting region at the one side and said area S₂" of the light emitting region at the other side with respect to the sum of said area S₁" of the light emitting region at the one side and said area S₂" of the light emitting region at the other side, and judging whether said ratio is within predetermined upper and lower limit values.

13. The method for monitoring an operation of high frequency resistance welding and induction heating welding of an electric resistance welded steel pipe according to any one of claims 9 to 12, **characterized by**, in said judgment, judging whether said geometric V-convergence point is at an upstream side from a predetermined X-direction position in said processed image, wherein said predetermined X-direction position is a position of said geometric V-convergence point when said misalignment does not occur.

14. The method for monitoring an operation of high frequency resistance welding and induction heating welding of an electric resistance welded steel pipe according to claim 9, **characterized by**, in said calculation of the areas S₁, S₂, finding a bisector of an angle of intersection of the approximation lines of said two end parts in the circumferential direction converging to the V-shape or a median line passing through said geometric V-convergence point in a triangular shape formed by the approximation lines of said end parts in the circumferential direction converging to the V-shape and the end part at the upstream side in the X-direction of said image in said processed image and correcting said area S₁ of the light emitting region at the one side and said area S₂ of light emitting region at the other side.

15. A computer program for monitoring an operation of high frequency resistance welding and induction heating welding of an electric resistance welded steel pipe continuously forming a strip of metal plate (1) into a tubular shape by a group of rolls (2) while conveying the strip of metal plate (1) from an upstream side to a downstream side and heating two end parts (4, 4) of said metal plate (1) in its circumferential direction made to converge to a V-shape to melt and making two end parts of said metal plate (1) abut against each other, the program comprising instructions which, when the program is executed by a computer, cause the computer to run a process for detecting misalignment being a step difference between said two end parts (4, 4) of said metal plate (1) by obtaining a grasp of unevenness of light emitting regions of metal parts at two sides in the circumferential direction at an abutting position at an outside surface or inside surface of said metal plate (1) based on an image, captured by an imaging device (8) from the outside surface side or inside surface side of said metal plate (1) being formed into the tubular shape, of a region including a V-convergence portion where said two end parts in the circumferential direction converge to a V-shape and said metal parts flowing out to the surface of said metal plate (1) by electromagnetic force at a downstream side from said V-convergence portion, wherein the unevenness occurs in the light emitting regions due to the melting or red heat at the two sides of the abutting position at the outside surface side and inside surface side of the metal plate (1).

## Patentansprüche

1. Vorrichtung zur Überwachung eines Betriebs zum Hochfrequenz-Widerstandsschweißen und Induktionsheizschweißen eines widerstandsgeschweißten Stahlrohrs, bei dem ein Band einer Metallplatte (1) von einer Gruppe von Walzen (2) in eine Röhrenform endlosgeformt wird, während es von einer Stromaufwärtsseite zu einer Stromabwärtsseite befördert wird und zwei Endteile (4, 4) der Metallplatte (1), die in deren Umfangsrichtung veranlasst werden, in eine V-Form überzugehen, zum Schmelzen erwärmt werden und miteinander in Anlage gebracht werden, **dadurch gekennzeichnet, dass**
die Vorrichtung konfiguriert ist, eine Fehlausrichtung zu detektieren, bei der es sich um eine Stufendifferenz zwischen den zwei Endteilen (4, 4) der Metallplatte (1) handelt, indem auf Grundlage eines von einer Bildgebungsvorrichtung (8) aufgenommenen Bildes von der äußeren Oberflächenseite oder der inneren Oberflächenseite der in eine Röhrenform umgeformten Metallplatte (1) an zwei Seiten in der Umfangsrichtung an einer Anlageposition an einer Außenoberfläche oder einer Innenoberfläche der Metallplatte (1) eine Unebenheitserfassung lichtemittierender Bereiche von Metallteilen erlangt wird, von einem Bereich, der einen V-Übergangsabschnitt aufweist, in dem zwei Endteile in Umfangsrichtung in eine V-Form übergehen und die Metallteile mittels elektromagnetischer Kraft von dem V-Übergangsabschnitt an einer Stromabwärtsseite zu der Oberfläche der Metallplatte (1) hinausfließen, wobei die Unebenheit in den lichtemittierenden Bereichen aufgrund des Schmelzens oder der Rotwärme an den zwei Seiten der Anlageposition an der äußeren Oberflächenseite und der inneren Oberflächenseite der Metallplatte (1) auftritt.

2. Vorrichtung zur Überwachung eines Betriebs zum Hochfrequenz-Widerstandsschweißen und Induktionsheizschweißen eines widerstandsgeschweißten Stahlrohrs nach Anspruch 1, **dadurch gekennzeichnet, dass** die Vorrichtung aufweist:
eine Eingabeeinrichtung (101), in die ein Bild mit einer Förderrichtung der Metallplatte (1) als X-Richtung und einer Umfangsrichtung der Metallplatte (1) als Y-Richtung aus der Bildgebungsvorrichtung eingegeben wird,
eine Bildverarbeitungseinrichtung (102) zum Durchführen von Bildverarbeitung an dem in die Eingabeeinrichtung eingegebenen Bild,
eine V-Übergangspunkt-Detektionseinrichtung (103) zum Detektieren eines geometrischen V-Übergangspunktes, an dem sich zwei zu der V-Form übergehende Endteile in der Umfangsrichtung geometrisch schneiden, durch lineares Approximieren der zwei Endteile in der Umfangsrichtung und Ermitteln des Schnittpunkts der Approximationslinien der zwei Endteile in der Umfangsrichtung in dem von der Bildverarbeitungseinrichtung verarbeiteten Bild,
eine Flächenberechnungseinrichtung (104) zum Ermitteln einer durch den durch die V-Übergangspunkt-Detektionseinrichtung detektierten geometrischen V-Übergangspunkt verlaufenden Linie und parallel zur X-Richtung des Bildes in dem von der Bildverarbeitungseinrichtung verarbeiteten Bild unter Verwendung der Linie als Anlageposition, und Berechnen einer Fläche S₁ des lichtemittierenden Bereichs des Metallteils an der vom geometrischen V-Übergangspunkt stromabwärtigen Seite an einer Seite, die durch die Linie geteilt wird, und einer Fläche S₂ des lichtemittierenden Bereichs des Metallteils an der von dem geometrischen V-Übergangspunkt stromabwärtigen Seite auf der anderen Seite, die von der Linie geteilt wird, und
eine Beurteilungseinrichtung (105) zum Vergleichen der Flächen S₁, S₂ der lichtemittierenden Bereiche an den zwei Seiten der von der Flächenberechnungseinrichtung berechneten Anlageposition, um das Auftreten von Fehlausrichtung zu beurteilen.

3. Vorrichtung zur Überwachung eines Betriebs zum Hochfrequenz-Widerstandsschweißen und Induktionsheizschweißen eines widerstandsgeschweißten Stahlrohrs nach Anspruch 1, **dadurch gekennzeichnet, dass** die Vorrichtung aufweist:
eine Eingabeeinrichtung (101), in die ein Bild mit einer Förderrichtung der Metallplatte (1) als X-Richtung und einer Umfangsrichtung der Metallplatte (1) als Y-Richtung von der Bildgebungsvorrichtung eingegeben wird,
eine Bildverarbeitungseinrichtung (102) zum Durchführen von Bildverarbeitung an dem in die Eingabeeinrichtung eingegebenen Bild,
eine V-Übergangspunkt-Detektionseinrichtung (103) zum Detektieren eines geometrischen V-Übergangspunktes, an dem sich zwei zu der V-Form übergehende Endteile in Umfangsrichtung geometrisch schneiden, durch lineares Approximieren der zwei Endteile in der Umfangrichtung und Ermitteln des Schnittpunkts der Approximationslinien der zwei Endteile in der Umfangsrichtung in dem von der Bildverarbeitungseinrichtung verarbeiteten Bild,
eine Flächenberechnungseinrichtung (104) zum Verlängern der die zwei Endteile in Umfangsrichtung linear approximierenden Approximationslinien auf die Stromabwärtsseite über den geometrischen V-Übergangspunkt, und Berechnen einer Fläche S₁" des lichtemittierenden Bereichs des Metallteils außerhalb von einer der verlängerten Approximationslinien, und einer Fläche S₂" des lichtemittierenden Bereichs des Metallteils außerhalb der anderen der verlängerten Approximationslinien, und
eine Beurteilungseinrichtung (105) zum Vergleichen der Flächen S₁", S₂" der lichtemittierenden Bereiche, die von der Flächenberechnungseinrichtung berechnet wurden, um das Auftreten von Fehlausrichtung zu beurteilen.

4. Vorrichtung zur Überwachung eines Betriebs zum Hochfrequenz-Widerstandsschweißen und Induktionsheizschweißen eines widerstandsgeschweißten Stahlrohrs nach Anspruch 2, **dadurch gekennzeichnet, dass** die Beurteilungseinrichtung ein Verhältnis entweder der Fläche S₁ des einen lichtemittierenden Bereichs auf der einen Seite oder der Fläche S₂ des lichtemittierenden Bereichs auf der anderen Seite in Bezug auf die Summe des Bereichs S₁ des lichtemittierenden Bereichs auf der einen Seite und des Bereichs S₂ des lichtemittierenden Bereichs auf der anderen Seite ermittelt sowie beurteilt, ob das Verhältnis innerhalb vorgegebener oberer und unterer Grenzwerte liegt.

5. Vorrichtung zur Überwachung eines Betriebs zum Hochfrequenz-Widerstandsschweißen und Induktionsheizschweißen eines widerstandsgeschweißten Stahlrohrs nach Anspruch 3, **dadurch gekennzeichnet, dass** die Beurteilungseinrichtung ein Verhältnis entweder der Fläche S₁" des einen lichtemittierenden Bereichs auf der einen Seite oder der Fläche S₂" des lichtemittierenden Bereichs auf der anderen Seite in Bezug auf die Summe der Fläche S₁" des lichtemittierenden Bereichs auf der einen Seite und der Fläche S₂" des lichtemittierenden Bereichs auf der anderen Seite ermittelt sowie beurteilt, ob das Verhältnis innerhalb vorgegebener oberer und unterer Grenzwerte liegt.

6. Vorrichtung zur Überwachung eines Betriebs zum Hochfrequenz-Widerstandsschweißen und Induktionsheizschweißen eines widerstandsgeschweißten Stahlrohrs nach einem der Ansprüche 2 bis 5, **dadurch gekennzeichnet, dass** die Beurteilungseinrichtung aus einer vorgegebenen X-Richtungsposition in dem von der Bildverarbeitungseinrichtung verarbeiteten Bild beurteilt, ob der geometrische V-Übergangspunkt auf einer Stromaufwärtsseite liegt, wobei die vorgegebene X-Richtungsposition eine Position des geometrischen V-Übergangspunkts ist, wenn die Fehlausrichtung nicht auftritt.

7. Vorrichtung zur Überwachung eines Betriebs zum Hochfrequenz-Widerstandsschweißen und Induktionsheizschweißen eines widerstandsgeschweißten Stahlrohrs nach Anspruch 2, **dadurch gekennzeichnet, dass** die Flächenberechnungseinrichtung eine Halbierende des Schnittwinkels der Approximationslinien der zwei in die V-Form übergehenden Endteile in der Umfangsrichtung oder eine durch den geometrischen Übergangspunkt hindurchverlaufende Mittellinie in einer Dreiecksform ermittelt, die von den in die V-Form übergehenden Approximationslinien der Endteile in der Umfangsrichtung und dem Endteil auf der Stromaufwärtsseite in der X-Richtung des Bilds in dem an der Bildverarbeitungseinrichtung verarbeiteten Bild gebildet wird, und die Fläche S₁ des lichtemittierenden Bereichs auf der einen Seite und die Fläche S₂ des lichtemittierenden Bereichs auf der anderen Seite korrigiert, die von der Flächenberechnungseinrichtung berechnet wurden.

8. Verfahren zur Überwachung eines Betriebs zum Hochfrequenz-Widerstandsschweißen und Induktionsheizschweißen eines widerstandsgeschweißten Stahlrohrs, bei dem ein Band einer Metallplatte (1) von einer Gruppe von Walzen (2) in eine Röhrenform endlosgeformt wird, während es von einer Stromaufwärtsseite auf eine Stromabwärtsseite befördert wird und zwei Endteile (4, 4) der Metallplatte (1), die in deren Umfangsrichtung veranlasst werden, in eine V-Form überzugehen, zum Schmelzen erwärmt werden und miteinander in Anlage gebracht werden, **dadurch gekennzeichnet, dass**
das Verfahren umfasst: Aufnehmen eines Bildes durch eine Bildgebungsvorrichtung (8) von einer äußeren Oberflächenseite oder einer inneren Oberflächenseite der in die Röhrenform umgeformten Metallplatte (1) eines Bereichs, der einen V-Übergangsabschnitt beinhaltet, an dem zwei Endteile in der Umfangsrichtung in eine V-Form übergehen und Metallteile zu der Oberfläche der Metallplatte (1) durch elektromagnetische Kraft an einer Stromabwärtsseite des V-Übergangsabschnitts hinausfließen, sowie Detektieren einer Fehlausrichtung, bei der es sich um eine Stufendifferenz zwischen den zwei Endteilen (4, 4) der Metallplatte (1) handelt, indem auf Grundlage des Bildes von der äußeren Oberflächenseite oder der inneren Oberflächenseite der Metallplatte (1) an zwei Seiten in der Umfangsrichtung an einer Anlageposition an einer Außenoberfläche oder einer Innenoberfläche der Metallplatte (1) eine Unebenheitserfassung lichtemittierender Bereiche des Metallteils erlangt wird, wobei die Unebenheit in den lichtemittierenden Bereichen aufgrund des Schmelzens oder der Rotwärme an den zwei Seiten der Anlageposition an der äußeren Oberflächenseite und der inneren Oberflächenseite der Metallplatte (1) auftritt.

9. Verfahren zur Überwachung eines Betriebs zum Hochfrequenz-Widerstandsschweißen und Induktionsheizschweißen eines widerstandsgeschweißten Stahlrohrs nach Anspruch 8, **gekennzeichnet durch**:
Aufnehmen, durch die Bildgebungsvorrichtung, eines Bildes mit einer Förderrichtung der Metallplatte (1) als X-Richtung und einer Umfangsrichtung der Metallplatte (1) als Y-Richtung,
Durchführen von Bildverarbeitung an dem aufgenommenen Bild,
Detektieren eines geometrischen V-Übergangspunkts dort, wo sich die zwei in Umfangsrichtung in die V-Form übergehenden Endteile geometrisch schneiden, durch lineares Approximieren der zwei Endteile in Umfangsrichtung und Ermitteln des Schnittpunkts der Approximationslinien der zwei Endteile in Umfangsrichtung in dem verarbeiteten Bild,
Ermitteln einer durch den detektierten geometrischen V-Übergangspunkt verlaufenden und parallel zu der X-Richtung des Bildes verlaufenden Linie in dem verarbeiteten Bild unter Verwendung der Linie als Anlageposition, sowie Berechnen einer Fläche S₁ des lichtemittierenden Bereichs des Metallteils an der von dem geometrischen V-Übergangspunkt stromabwärtigen Seite an einer Seite, die durch die Linie geteilt wird, und einer Fläche S₂ des lichtemittierenden Bereichs des Metallteils an der vom geometrischen V-Übergangspunkt stromabwärtigen Seite auf der anderen Seite, die von der Linie geteilt wird, und
Vergleichen der Flächen S₁, S₂ der lichtemittierenden Bereiche auf den zwei Seiten der Anlageposition, um das Auftreten von Fehlausrichtung zu beurteilen.

10. Verfahren zur Überwachung eines Betriebs zum Hochfrequenz-Widerstandsschweißen und Induktionsheizschweißen eines widerstandsgeschweißten Stahlrohrs nach Anspruch 8, **gekennzeichnet durch**:
Aufnehmen, durch die Bildgebungsvorrichtung, eines Bildes mit einer Förderrichtung der Metallplatte (1) als X-Richtung und einer Umfangsrichtung der Metallplatte (1) als Y-Richtung,
Durchführen von Bildverarbeitung an dem aufgenommenen Bild,
Detektieren eines geometrischen V-Übergangspunkts dort, wo sich die zwei in Umfangsrichtung in die V-Form übergehenden Endteile geometrisch schneiden, durch lineares Approximieren der zwei Endteile in Umfangsrichtung und Ermitteln des Schnittpunkts der Approximationslinien der zwei Endteile in Umfangsrichtung in dem verarbeiteten Bild,
Verlängern der die zwei Endteile in Umfangsrichtung linear approximierenden Approximationslinien auf die Stromabwärtsseite der Förderrichtung über den geometrischen V-Übergangspunkt und Berechnen einer Fläche S₁" des lichtemittierenden Bereichs des Metallteils außerhalb von einer der verlängerten Approximationslinien und einer Fläche S₂" des lichtemittierenden Bereichs des Metallteils außerhalb der anderen der verlängerten Approximationslinien, und
Vergleichen der berechneten Flächen S₁", S₂" der lichtemittierenden Bereiche, um das Auftreten von Fehlausrichtung zu beurteilen.

11. Verfahren zur Überwachung eines Betriebs zum Hochfrequenz-Widerstandsschweißen und Induktionsheizschweißen eines widerstandsgeschweißten Stahlrohrs nach Anspruch 9, **gekennzeichnet durch**, bei dieser Beurteilung, Ermitteln eines Verhältnisses entweder der Fläche S₁ des lichtemittierenden Bereichs auf der einen Seite oder der Fläche S₂ des lichtemittierenden Bereichs auf der anderen Seite bezogen auf die Summe des Bereichs S₁ des lichtemittierenden Bereichs auf der einen Seite und der Fläche S₂ des lichtemittierenden Bereichs auf der anderen Seite, und Beurteilen, ob das Verhältnis innerhalb vorgegebener oberer oder unterer Grenzwerte liegt.

12. Verfahren zur Überwachung eines Betriebs zum Hochfrequenz-Widerstandsschweißen und Induktionsheizschweißen eines widerstandsgeschweißten Stahlrohrs nach Anspruch 10, **gekennzeichnet durch**, bei dieser Beurteilung, Ermitteln eines Verhältnisses entweder der Fläche S₁" des lichtemittierenden Bereichs auf der einen Seite oder der Fläche S₂" des lichtemittierenden Bereichs auf der anderen Seite bezogen auf die Summe des Bereichs S₁" des lichtemittierenden Bereichs auf der einen Seite und der Fläche S₂" des lichtemittierenden Bereichs auf der anderen Seite, und Beurteilen, ob das Verhältnis innerhalb vorgegebener oberer oder unterer Grenzwerte liegt.

13. Verfahren zur Überwachung eines Betriebs zum Hochfrequenz-Widerstandsschweißen und Induktionsheizschweißen eines widerstandsgeschweißten Stahlrohrs nach einem der Ansprüche 9 bis 12, **gekennzeichnet durch**, bei dieser Beurteilung, Beurteilen, aus einer vorgegebenen X-Richtungsposition in dem verarbeiteten Bild, ob der geometrische V-Übergangspunkt auf einer Stromaufwärtsseite liegt, wobei die vorgegebene X-Richtungsposition eine Position des geometrischen V-Übergangspunkts ist, wenn die Fehlausrichtung nicht auftritt.

14. Verfahren zur Überwachung eines Betriebs zum Hochfrequenz-Widerstandsschweißen und Induktionsheizschweißen eines widerstandsgeschweißten Stahlrohrs nach Anspruch 9, **gekennzeichnet durch**, bei dieser Berechnung der Flächen S₁, S₂, Ermitteln einer Halbierenden eines Schnittwinkels der Approximationslinien der zwei in die V-Form übergehenden Endteile in Umfangsrichtung oder einer durch den geometrischen Übergangspunkt verlaufenden Mittellinie in einer Dreiecksform, die von den in die V-Form übergehenden Approximationslinien der Endteile in der Umfangsrichtung und dem Endteil auf der Stromaufwärtsseite in der X-Richtung des Bilds in dem verarbeiteten Bild gebildet wird, und Korrigieren der Fläche S₁ des lichtemittierenden Bereichs auf der einen Seite und der Fläche S₂ des lichtemittierenden Bereichs auf der anderen Seite.

15. Computerprogramm zur Überwachung eines Betriebs zum Hochfrequenz-Widerstandsschweißen und Induktionsheizschweißen eines widerstandsgeschweißten Stahlrohrs, bei dem ein Band aus einer Metallplatte (1) von einer Gruppe von Walzen (2) in Röhrenform endlosgeformt wird, während das Band aus einer Metallplatte (2) von einer Stromaufwärtsseite auf eine Stromabwärtsseite befördert wird, und zwei Endteile (4, 4) der Metallplatte (1), die in deren Umfangsrichtung veranlasst werden, in eine V-Form überzugehen, zum Schmelzen erwärmt werden und zwei Endteile der Metallplatte (1) miteinander in Anlage gebracht werden, wobei das Programm Befehle aufweist, die, wenn das Programm von einem Computer ausgeführt wird, den Computer veranlassen, einen Prozess zum Detektieren von Fehlausrichtung ablaufen zu lassen, bei der es sich um eine Stufendifferenz zwischen zwei Endteilen (4, 4) der Metallplatte (1) handelt, durch Erlangen einer Unebenheitserfassung lichtemittierender Bereiche von Metallteilen an zwei Seiten in der Umfangsrichtung an einer Anlageposition an einer Außenoberfläche oder Innenoberfläche der Metallplatte (1) auf Grundlage eines von einer Bildgebungsvorrichtung (8) von der Außenoberflächenseite oder der Innenoberflächenseite der in die Röhrenform umgeformten Metallplatte (1) aufgenommenen Bildes, von einem Bereich, der einen V-Übergangsabschnitt beinhaltet, in dem die zwei Endteile in Umfangsrichtung in eine V-Form übergehen und die Metallteile mittels elektromagnetischer Kraft von dem V-Übergangsabschnitt an einer Stromabwärtsseite zur Oberfläche der Metallplatte (1) hinausfließen, wobei die Unebenheit in den lichtemittierenden Bereichen aufgrund des Schmelzens oder der Rotwärme an den zwei Seiten der Anlageposition an der äußeren Oberflächenseite und der inneren Oberflächenseite der Metallplatte (1) auftritt.

## Revendications

1. Appareil de surveillance d'une opération de soudage par résistance haute fréquence et de soudage à chauffage par induction d'un tuyau en acier soudé par résistance électrique, où une bande de plaque métallique (1) est façonnée en continu en une forme tubulaire par un groupe de rouleaux (2) pendant son transport depuis un côté en amont vers un côté en aval et deux parties d'extrémité (4, 4) de ladite plaque métallique (1) dans leur sens circonférentiel, faites pour converger en une forme en V sont chauffées de manière à fondre et sont faites pour venir en butée l'une contre l'autre, **caractérisé en ce que**
ledit appareil est configuré pour détecter un désalignement qui est un écart entre lesdites deux parties d'extrémité (4, 4) de ladite plaque métallique (1) en obtenant une idée de l'irrégularité de régions électroluminescentes de parties métalliques sur deux côtés dans le sens circonférentiel sur une position de butée sur une surface extérieure ou une surface intérieure de ladite plaque métallique (1) sur la base d'une image, capturée par un dispositif d'imagerie (8) depuis le côté de surface extérieure ou le côté de surface intérieure de ladite plaque métallique (1) qui est façonnée en la forme tubulaire, d'une région comportant une partie de convergence en V où les deux parties d'extrémité dans le sens circonférentiel convergent en une forme en V et lesdites parties métalliques sortent de la surface de ladite plaque métallique (1) par une forme électromagnétique sur un côté en aval depuis ladite partie de convergence en V, dans lequel l'irrégularité apparaît dans les régions électroluminescentes du fait de la fusion ou de la chaleur rouge sur les deux côtés de la position de butée sur le côté de surface extérieure et le côté de surface intérieure de la plaque métallique (1).

2. Appareil de surveillance d'une opération de soudage par résistance haute fréquence et de soudage à chauffage par induction d'un tuyau en acier soudé par résistance électrique selon la revendication 1, **caractérisé en ce que** l'appareil comprend :
un moyen d'entrée (101), dans lequel une image présentant un sens de transport de ladite plaque métallique (1) en tant qu'un sens X et un sens circonférentiel de ladite plaque métallique (1) en tant qu'un sens Y est entrée depuis ledit dispositif d'imagerie,
un moyen de traitement d'image (102) pour réaliser un traitement d'image sur l'entrée d'image dans ledit moyen d'entrée,
un moyen de détection de point de convergence en V (103) pour détecter un point géométrique de convergence en V où lesdites deux parties d'extrémité dans le sens circonférentiel convergeant en la forme en V s'entrecroisent de manière géométrique en effectuant une approximation linéaire desdites deux parties d'extrémité dans le sens circonférentiel et en trouvant le point d'intersection des lignes d'approximation desdites deux parties d'extrémité dans le sens circonférentiel sur l'image traitée par ledit moyen de traitement d'image,
un moyen de calcul de zone (104) pour trouver une ligne passant à travers le point géométrique de convergence en V détecté par ledit moyen de détection de point de convergence en V et de manière parallèle au sens X de l'image sur l'image traitée par ledit moyen de traitement d'image, en utilisant ladite ligne en tant que la position de butée, et en calculant une zone S₁ de la région électroluminescente de ladite partie métallique sur le côté en aval depuis le point géométrique de convergence en V sur un côté divisé par ladite ligne et une zone S₂ de la région électroluminescente de ladite partie métallique sur le côté en aval depuis ledit point géométrique de convergence en V sur l'autre côté divisé par ladite ligne, et
un moyen d'évaluation (105) pour comparer les zones S₁, S₂ des régions électroluminescente sur les deux côtés de la position de butée calculée par ledit moyen de calcul de zone pour évaluer l'apparition du désalignement.

3. Appareil de surveillance d'une opération de soudage par résistance haute fréquence et de soudage à chauffage par induction d'un tuyau en acier soudé par résistance électrique selon la revendication 1, **caractérisé en ce que** l'appareil comprend
un moyen d'entrée (101) dans lequel une image présentant un sens de transport de ladite plaque métallique (1) en tant qu'un sens X et un sens circonférentiel de ladite plaque métallique (1) en tant qu'un sens Y est entrée depuis ledit dispositif d'imagerie,
un moyen de traitement d'image (102) pour effectuer un traitement d'image sur l'image entrée dans ledit moyen d'entrée,
un moyen de détection de point de convergence en V (103) pour détecter un point géométrique de convergence en V où lesdites deux parties d'extrémité dans le sens circonférentiel convergeant en une forme en V s'entrecroisent de manière géométrique en effectuant une approximation linéaire desdites deux parties d'extrémité dans le sens circonférentiel et en trouvant le point d'intersection des lignes d'approximation desdites deux parties d'extrémité dans le sens circonférentiel sur l'image traitée par ledit moyen de traitement d'image,
un moyen de calcul de zone (104) pour étendre les lignes d'approximation effectuant une approximation linéaire des deux parties d'extrémité dans le sens circonférentiel vers le côté en aval au-dessus dudit point géométrique de convergence en V et pour calculer une zone S₁" de la région électroluminescente de ladite partie métallique à l'extérieur d'une desdites lignes d'approximation étendues et une zone S₂" de la région électroluminescente de ladite partie métallique à l'extérieur de l'autre des lignes d'approximation étendues, et
un moyen d'évaluation (105) pour comparer les zones S₁", S₂" des régions électroluminescentes calculées par ledit moyen de calcul de zone pour évaluer l'apparition d'un désalignement.

4. Appareil de surveillance d'une opération de soudage par résistance haute fréquence et de soudage à chauffage par induction d'un tuyau en acier soudé par résistance électrique selon la revendication 2, **caractérisé en ce que** ledit moyen d'évaluation trouve un rapport entre soit ladite zone S₁ de la région électroluminescente sur un côté soit ladite zone S₂ de la région électroluminescente sur l'autre côté et la somme de ladite zone S₁ de la région électroluminescente sur un côté et de ladite zone S₂ de la région électroluminescente sur l'autre côté et évalue si ledit rapport se trouve dans des valeurs limites supérieures et inférieures prédéterminées.

5. Appareil de surveillance d'une opération de soudage par résistance haute fréquence et de soudage à chauffage par induction d'un tuyau en acier soudé par résistance électrique selon la revendication 3, **caractérisé en ce que** ledit moyen d'évaluation trouve un rapport entre soit ladite zone S₁" de la région électroluminescente sur un côté soit de ladite zone S₂" de la région électroluminescente sur l'autre côté et la somme de ladite zone S₁" de la région électroluminescente sur un côté et de ladite zone S₂" de la région électroluminescente sur l'autre côté et évalue si ledit rapport se trouve dans des valeurs de limite supérieures et inférieures prédéterminées.

6. Appareil de surveillance d'une opération de soudage par résistance haute fréquence et de soudage à chauffage par induction d'un tuyau en acier soudé par résistance électrique selon l'une quelconque des revendications 2 à 5, **caractérisé en ce que** ledit moyen d'évaluation évalue si ledit point géométrique de convergence en V se situe sur un côté en amont depuis un sens X prédéterminé sur l'image traitée par ledit moyen de traitement d'image, dans lequel ladite position de sens X prédéterminée est une position dudit point géométrique de convergence en V lorsque ledit désalignement n'apparaît pas.

7. Appareil de surveillance d'une opération de soudage par résistance haute fréquence et de soudage à chauffage par induction d'un tuyau en acier soudé par résistance électrique selon la revendication 2, **caractérisé en ce que** le moyen de calcul de zone trouve une bissectrice d'un angle d'intersection des lignes d'approximation desdites deux parties d'extrémité dans le sens circonférentiel convergeant en la forme en V ou une ligne médiane passant à travers ledit point géométrique de convergence en V en une forme triangulaire façonnée par les lignes d'approximation desdites parties d'extrémité dans le sens circonférentiel convergeant en la forme en V et la partie d'extrémité sur le côté en amont dans le sens X de ladite image sur l'image traitée sur ledit moyen de traitement d'image et corrige ladite zone S₁ de la région électroluminescente sur un côté et ladite zone S₂ de la région électroluminescente sur l'autre côté calculées par ledit moyen de calcul de zone.

8. Procédé de surveillance d'une opération de soudage par résistance haute fréquence et de soudage à chauffage par induction d'un tuyau en acier soudé par résistance électrique façonnant en continu une bande de plaque métallique (1) en une forme tubulaire par un groupe de rouleaux (2) pendant le transport de la bande de plaque métallique (1) depuis un côté en amont vers un côté en aval et chauffant les deux parties d'extrémité (4, 4) de ladite plaque métallique (1) dans leur sens circonférentiel faites pour converger en une forme en V pour fondre et amenant en butée les deux parties d'extrémité (4, 4) de ladite plaque métallique (1) l'une contre l'autre, **caractérisé en ce que** :
ledit procédé comprend la capture d'une image, par un dispositif d'imagerie (8) depuis un côté de surface extérieure ou un côté de surface intérieure de ladite plaque métallique (1) façonnée en la forme tubulaire, d'une région comportant une partie de convergence en V où lesdites deux parties d'extrémité dans le sens circonférentiel convergent en une forme en V et des parties métalliques sortent de la surface de ladite plaque métallique (1) par une force électromagnétique sur un côté en aval depuis ladite partie de convergence en V, et la détection d'un désalignement qui est un écart entre lesdites deux parties d'extrémité (4, 4) de ladite plaque métallique (1) en obtenant une idée de l'irrégularité de régions électroluminescentes de ladite partie métallique sur deux côtés dans le sens circonférentiel sur une position de butée sur la surface extérieure ou la surface intérieure de ladite plaque métallique (1) sur la base de ladite image, dans lequel l'irrégularité apparaît dans les régions électroluminescentes du fait de la fusion ou de la chaleur rouge sur les deux côtés de la position de butée sur le côté de surface extérieure et le côté de surface intérieure de la plaque métallique (1).

9. Procédé de surveillance d'une opération de soudage par résistance haute fréquence et de soudage à chauffage par induction d'un tuyau en acier soudé par résistance électrique selon la revendication 8, **caractérisé par** :
la capture d'une image présentant un sens de transport de ladite plaque métallique (1) en tant qu'un sens X et un sens circonférentiel de ladite plaque métallique (1) en tant qu'un sens Y par ledit dispositif d'imagerie,
la réalisation d'un traitement d'image sur ladite image capturée,
la détection d'un point géométrique de convergence en V où lesdites deux parties d'extrémité dans le sens circonférentiel convergeant en la forme en V s'entrecroisent de manière géométrique en effectuant une approximation linéaire desdites deux parties d'extrémité dans le sens circonférentiel et en trouvant le point d'intersection des lignes d'approximation desdites deux parties d'extrémité dans le sens circonférentiel sur l'image traitée,
la découverte d'une ligne passant à travers le point géométrique de convergence en V détecté et de manière parallèle au sens X de l'image sur l'image traitée, en utilisant ladite ligne en tant que la position de butée, et en calculant une zone S₁ de la région électroluminescente de ladite partie métallique sur le côté en aval depuis ledit point géométrique de convergence en V sur un côté divisé par ladite ligne et une zone S₂ de la région électroluminescente de ladite partie métallique sur le côté en aval depuis ledit point géométrique de convergence en V sur l'autre côté divisé par ladite ligne, et
la comparaison des zones S₁, S₂ des régions électroluminescentes sur les deux côtés de la position de butée pour évaluer l'apparition du désalignement.

10. Procédé de surveillance d'une opération de soudage par résistance haute fréquence et de soudage à chauffage par induction d'un tuyau en acier soudé par résistance électrique selon la revendication 8, **caractérisé par** :
la capture d'une image présentant un sens de transport de ladite plaque métallique (1) en tant qu'un sens X et un sens circonférentiel de ladite plaque métallique (1) en tant qu'un sens Y par ledit dispositif d'imagerie,
la réalisation d'un traitement d'image sur ladite image capturée,
la détection d'un point géométrique de convergence en V où lesdites deux parties d'extrémité dans le sens circonférentiel convergeant en la forme en V s'entrecroisent de manière géométrique en réalisant une approximation linéaire desdites deux parties d'extrémité dans le sens circonférentiel et en trouvant le point d'intersection des lignes d'approximation desdites deux parties d'extrémité dans le sens circonférentiel sur l'image traitée,
l'extension des lignes d'approximation réalisant une approximation linéaire desdites deux parties d'extrémité dans le sens circonférentiel vers le côté en aval dudit sens de transport au-delà dudit point géométrique de convergence en V et le calcul d'une zone S₁" de la région électroluminescente de ladite partie métallique sur l'extérieur depuis l'une desdites lignes d'approximation étendues et d'une zone S₂" de la région électroluminescente de ladite partie métallique à l'extérieur depuis l'autre des lignes d'approximation étendues, et
la comparaison desdites zones S₁", S₂" des régions électroluminescentes calculées pour évaluer l'apparition d'un désalignement.

11. Procédé de surveillance d'une opération de soudage par résistance haute fréquence et de soudage à chauffage par induction d'un tuyau en acier soudé par résistance électrique selon la revendication 9, **caractérisé par**, lors de ladite évaluation, la découverte d'un rapport entre soit ladite zone S₁ de la région électroluminescente sur un côté soit ladite zone S₂ de la région électroluminescente sur l'autre côté et la somme de ladite zone S₁ de la région électroluminescente sur un côté et de ladite zone S₂ de la région électroluminescente sur l'autre côté, et l'évaluation pour savoir si ledit rapport est compris dans des valeurs de limite supérieures et inférieures prédéterminées.

12. Procédé de surveillance d'une opération de soudage par résistance haute fréquence et de soudage à chauffage par induction d'un tuyau en acier soudé par résistance électrique selon la revendication 10, **caractérisé par**, lors de ladite évaluation, la découverte d'un rapport entre soit ladite zone S₁" de la région électroluminescente sur un côté soit ladite zone S₂" de la région électroluminescente sur l'autre côté et la somme desdites zones S₁" de la région électroluminescente sur un côté et de ladite zone S₂" de la région électroluminescente sur l'autre côté, et l'évaluation pour savoir si ledit rapport est compris dans des valeurs de limite supérieures et inférieures prédéterminées.

13. Procédé de surveillance d'une opération de soudage par résistance haute fréquence et de soudage à chauffage par induction d'un tuyau en acier soudé par résistance électrique selon l'une quelconque des revendications 9 à 12, **caractérisé par**, lors de ladite évaluation, l'évaluation pour savoir si ledit point géométrique de convergence en V se trouve sur un côté en amont depuis une position de sens X prédéterminée sur ladite image traitée, dans lequel ladite position de sens X prédéterminée est une position dudit point géométrique de convergence en V lorsque ledit désalignement n'apparaît pas.

14. Procédé de surveillance d'une opération de soudage par résistance haute fréquence et de soudage à chauffage par induction d'un tuyau en acier soudé par résistance électrique selon la revendication 9, **caractérisé par**, lors dudit calcul des zones S₁, S₂, la découverte d'une bissectrice d'un angle d'intersection des lignes d'approximation desdites deux parties d'extrémité dans le sens circonférentiel convergeant en la forme en V ou d'une ligne médiane passant à travers ledit point géométrique de convergence en V en une forme triangulaire formée par les lignes d'approximation desdites parties d'extrémité dans le sens circonférentiel convergeant en la forme en V et la partie d'extrémité sur le côté en amont dans le sens X de ladite image sur ladite image traitée et la correction de ladite zone S₁ de la région électroluminescente sur un côté et de ladite zone S₂ de la région électroluminescente sur l'autre côté.

15. Programme d'ordinateur de surveillance d'une opération de soudage par résistance haute fréquence et de soudage à chauffage par induction d'un tuyau en acier soudé par résistance électrique façonnant en continu une bande de plaque métallique (1) en une forme tubulaire par un groupe de rouleaux (2) lors du transport de la bande de plaque métallique (1) depuis un côté en amont vers un côté en aval et chauffant deux parties d'extrémité (4, 4) de ladite plaque métallique (1) dans leur sens circonférentiel faites pour converger en une forme en V pour fondre et amenant en butée deux parties d'extrémité de ladite plaque métallique (1) l'une contre l'autre, le programme comprenant des instructions, qui, lorsque le programme est exécuté par un ordinateur, amènent l'ordinateur à lancer un processus de détection de désalignement qui est un écart entre lesdites deux parties d'extrémité (4, 4) de ladite plaque métallique (1) en obtenant une idée de l'irrégularité des régions électroluminescentes des parties métalliques sur deux côtés dans le sens circonférentiel sur une position de butée sur une surface extérieure ou une surface intérieure de ladite plaque métallique (1) sur la base d'une image, capturée par un dispositif d'imagerie (8) depuis le côté de surface extérieure ou le côté de surface intérieure de ladite plaque métallique (1) façonnée en la forme tubulaire, d'une région comportant une partie de convergence en V où lesdites deux parties d'extrémité dans le sens circonférentiel convergent en une forme en V et lesdites parties métalliques sortent de la surface de ladite plaque métallique (1) par une force électromagnétique sur un côté en aval depuis ladite partie de convergence en V, dans lequel l'irrégularité apparaît dans les régions électroluminescentes du fait de la fusion ou de la chaleur rouge sur les deux côtés de la position de butée sur le côté de surface extérieure et le côté de surface intérieure de la plaque métallique (1).
